Europäisches Patentamt

European Patent Office

Office européen des brevets

(19)

(11) **EP 1 299 779 B1**

(12) **EUROPÄISCHE PATENTSCHRIFT**

(45) Veröffentlichungstag und Bekanntmachung des Hinweises auf die Patenterteilung:
**30.11.2005 Patentblatt 2005/48**

(51) Int Cl.$^7$: **G05B 17/02**

(21) Anmeldenummer: **01962823.9**

(22) Anmeldetag: **03.07.2001**

(86) Internationale Anmeldenummer:
**PCT/EP2001/007608**

(87) Internationale Veröffentlichungsnummer:
**WO 2002/005041 (17.01.2002 Gazette 2002/03)**

(54) **VERFAHREN UND VORRICHTUNG ZUR VERARBEITUNG UND VORHERSAGE VON STRÖMUNGSPARAMETERN TURBULENTER MEDIEN**

METHOD AND DEVICE FOR PROCESSING AND PREDICTING THE FLOW PARAMETERS OF TURBULENT MEDIA

PROCEDE ET DISPOSITIF POUR TRAITER ET PREVOIR DES PARAMETRES D'ECOULEMENT DE MILIEUX TURBULENTS

(84) Benannte Vertragsstaaten:
**AT BE CH CY DE DK ES FI FR GB GR IE IT LI LU MC NL PT SE TR**

(30) Priorität: **07.07.2000 DE 10033183**

(43) Veröffentlichungstag der Anmeldung:
**09.04.2003 Patentblatt 2003/15**

(73) Patentinhaber:
• **Max-Planck-Gesellschaft zur Förderung der Wissenschaften e.V.
80539 München (DE)**
• **Ragwitz, Mario
76139 Karlsruhe (DE)**
• **Kantz, Holger
01187 Dresden (DE)**

(72) Erfinder:
• **RAGWITZ, Mario
76139 Karlsruhe (DE)**
• **KANTZ, Holger
01187 Dresden (DE)**

(74) Vertreter: **Hertz, Oliver
v. Bezold & Sozien
Patentanwälte
Akademiestrasse 7
80799 München (DE)**

(56) Entgegenhaltungen:
EP-A- 0 582 069          EP-A- 0 926 576
WO-A-98/42980           DE-A- 19 851 559
US-A- 5 289 041          US-A- 5 544 524

EP 1 299 779 B1

**Beschreibung**

Die Erfindung betrifft Verfahren zur Verarbeitung von Strömungsparametern turbulenter Medien, insbesondere Verfahren zur Vorhersage der Strömungsgeschwindigkeit in strömenden Medien und zur Vorhersage bestimmter nicht-linearer Effekte, z. B. von Böen in atmosphärischen Luftbewegungen. Die Erfindung betrifft auch die Anwendung derartiger Verfahren zur Steuerung der Betriebsparameter mechanischer Einrichtungen in turbulenten Strömungen, wie z. B. windbetriebenen Stromgeneratoren, und Vorrichtungen zur Umsetzung derartiger Verfahren. Die Erfindung ist auch auf die Steuerung komplexer technischer Vorgänge gerichtet, bei denen die Vorhersage der Windgeschwindigkeit von Bedeutung ist, wie sie z. B. auf Flughäfen, bei der Steuerung von Wind-Diesel-Systemen oder bei der Integration von Windgeneratoren in Versorgungsnetze auftreten.

Die Untersuchung turbulent strömender Medien (Flüssigkeiten oder Gase) ist in den verschiedensten technischen Gebieten von Interesse. Bspw. besteht ein Bestreben nach einem besseren Verständnis der Dynamik von atmosphärischen Luftbewegungen nahe der Erdoberfläche (Winddynamik), um Informationen für die Wettervorhersage oder für Turbulenzvorhersagen zu gewinnen. Diese beiden Aufgaben unterscheiden sich durch den Vorhersagezeitraum und durch die räumliche Auflösung der Vorhersage. Zu ihrer Lösung werden jeweils angepasste Vorhersagemodelle verwendet. Zur Wettervorhersage mit einem längeren Vorhersagehorizont von mindestens einigen Stunden werden nummerische Methoden aus der Kontinuumsmechanik auf der Basis von Navier-Stokes-Gleichungen verwendet, die das vorhergesagte Windfeld im betrachteten Raumvolumen ausgeben. Für eine lokale Turbulenzvorhersage mit kürzerem Zeithorizont im Sekunden- oder Minutenbereich kann grundsätzlich auf eines der folgenden Modelle zurückgegriffen werden.

Es ist erstens auch bei der lokalen Turbulenzvorhersage möglich, die Lösung von Navier-Stokes-Gleichungen zu verwenden. Aus bekannten Startwerten der Windgeschwindigkeit und des Druckes im Medium und aus Randbedingungen könnten theoretisch die Feldgleichungen gelöst und auf dieser Grundlage Vorhersagen getroffen werden. Numerische Lösungen der entsprechenden partiellen Differentialgleichungen sind prinzipiell schwierig und bei den typischerweise hohen Reynoldszahlen unter atmosphärischen Bedingungen nahezu unmöglich. Übliche Näherungsverfahren (z. B. Linearisierung der Gleichungen, Reduktion der Dimensionalität oder Annahme der Rotationsfreiheit des Vektorfeldes) können nicht durchgeführt werden, da die Nicht-Linearität, die Dreidimensionalität und das Auftreten von Wirbeln von entscheidender Bedeutung für die Natur der Lösungen sind. Außerdem erschweren die riesige Ausdehnung des Systems Atmosphäre und die große Entfernung der atmosphärischen Grenzschicht von einem Gleichgewichtszustand die numerische Betrachtung der Feldgleichungen. Außerdem können in kaum einer praktischen Situation die Anfangs- und Randbedingungen mit hinreichender Genauigkeit angegeben werden, um die Integration der Gleichung zu ermöglichen. Die Lösung der hydrodynamischen Gleichungen stellt somit keine praktisch relevante Option für das betrachtete Problem dar.

Des Weiteren ist die Anwendung linear-stochastischer Modelle möglich. Bei der Anwendung linearer Methoden besteht die Grundhypothese darin, dass die gemessene Zeitreihe charakteristischer Strömungsdaten als Superposition mehrerer periodischer Signale betrachtet wird, deren Zeitentwicklung durch zusätzliche dynamisches Rauschen modifiziert ist. In diesem Bild ist der Wert der Zeitreihe zu einem späteren Zeitpunkt eine Linearkombination aus Werten zu früheren Zeitpunkten und additivem Rauschen. Die linearen Methoden sind generell nachteilig, da ggf. wertvolle Vorhersageinformationen im Rauschanteil untergehen. In Situationen, wo Vorhersagen auf der Basis einer oder weniger gemessener Zeitreihen getroffen werden müssen, und keine räumlich hinreichend gut aufgelösten Rand- und Anfangsbedingungen existieren, werden gegenwärtig typischerweise die folgenden linearen Methoden verwendet (siehe U. Schlink in "Theor. Appl. Climatol." Bd. 60, 1998, S. 191 ff.). Lineare Korrelationen der Lösungen von Navier-Stokes-Gleichungen bzw. der gemessenen Daten werden ausgewertet und die Abweichung von den linearen Korrelationen durch ein Rauschen angenähert. Die linear-stochastische Vorhersage setzt das Vorhandensein ausgeprägter globaler linear-deterministischer Anteile im Strömungsverhalten voraus, um aus linearen Korrelationen in gemessenen Zeitreihen ausreichend gute Vorhersageergebnisse zu erzielen. Hierbei bedeutet "global", dass lineare Korrelationen zwischen den letzten gemessenen Werten der Zeitreihe an den betrachteten Raumpunkten und dem vorherzusagenden Wert der Windgeschwindigkeit zu allen Zeiten und in allen Wettersituationen als konstant angenommen werden. Somit ist der deterministische Anteil eines durch linear-stochastische Modelle darstellbaren Verhaltens auf eine relativ kleine Klasse möglicher Prozesse begrenzt. Im Wesentlichen lassen sich harmonische Oszillationen und exponentielles Verhalten modellieren. Diese Modelle versagen jedoch bei chaotischen Zeitreihen mit nicht-linear deterministischem Charakter. Die wichtigste Klasse der linear-stochastischen Modelle sind autoregressive Modelle (AR-Modelle), auf die unten im Einzelnen eingegangen wird.

Ein dritter Ansatz zur Vorhersage von Strömungsgeschwindigkeiten in turbulenten Medien verwendet Methoden der nicht-linearen Zeitreihenanalyse auf der Grundlage der Konzepte des niedrigdimensionalen deterministischen Chaos. Insbesondere durch das komplexe dynamische Verhalten atmosphärischer Luftmassen folgen die Strömungsparameter aperiodischen, schwer vorhersagbaren und oft auch schwer klassifizierbaren Verläufen. Mit der nicht-linearen Zeitreihenanalyse wird versucht, aus beobachteten, gemessenen Daten möglichst viel über die Eigenschaften oder den Zustand des betrachteten Systems zu lernen. Bekannte Analyseverfahren zum Verständnis aperiodischer Signale werden z. B. von H. Kantz et al. in "Nonlinear Time Series Analysis", Cambridge University Press, Cambridge, 1997 oder von H. B. I. Abarbanel in "Analysis of Observed Chaotic Data", Springer, New York 1996, beschrieben. Diese Verfahren basieren auf dem Konzept des deterministischen Chaos. Deterministisches Chaos bedeutet, dass ein Systemzustand zu einem bestimmten Zeitpunkt in eindeutiger Weise den Systemzustand zu jedem beliebigen späteren Zeitpunkt festlegt, das System aber dennoch über längere Zeit unvorhersehbar ist. Dies ergibt sich daraus, dass der aktuelle Systemzustand mit einem unvermeidlichen Fehler erfasst wird, dessen Wirkung je nach Bewegungsgleichung des Systems exponentiell wächst. Nach einer systemtypischen Zeit besitzt ein simulierter Modellzustand mit dem Realzustand des Systems keine Ähnlichkeit mehr. Für kürzere Zeiten lassen sich Systemzustände, die durch charakteristische Muster in der Zeitreihe dargestellt werden, jedoch mit guter Genauigkeit vorhersagen.

Auf die Zeitreihenanalyse von Winddaten wird bspw. von M. Casdagli in "J. R. Statist. Soc. B." Band 54, 1991, Seite 303 ff. und von J. Hausmann "Zeitreihenanalyse und Steuerung autonomer Wind-Diesel-Systeme mit neuronalen Netzwerken", Diplomarbeit Universität Oldenburg, 1995, eingegangen. Für die Analyse skalarer (univariater) Zeitreihen hat sich herausgestellt, dass die Vorhersagefehler aus den linear-stochastischen Modellen einerseits und der nicht-linearen Zeitreihenanalyse andererseits im zeitlichen Mittel auf die gleiche (geringe) Zuverlässigkeit der Modelle schließen lassen. In den genannten Arbeiten wurde festgestellt, dass mit dem Konzept des deterministischen Chaos über den Beobachtungszeitraum gemittelt keine entscheidende Verbesserung der Turbulenzvorhersage erreicht werden kann. Die univariate, nicht-lineare Zeitreihenanalyse besitzt im zeitlichen Mittel deutliche Vorteile lediglich bei der Vorhersage schwach turbulenter Daten mit wenigen angeregten Freiheitsgraden. Der Kontrollparameter für die Turbulenz ist die Reynoldszahl. Turbulente Medien mit Reynoldszahlen bis zu etwa $10^2$ können gut durch niedrigdimensional-deterministische Modelle beschrieben werden. Atmosphärische Turbulenz in bodennahen Luftströmungen zeichnen sich jedoch durch Reynoldszahlen aus, die einige Größenordnungen höher sind. Somit lassen sich solche Phänomene im Allgemeinen nicht durch Konzepte des deterministischen Chaos beschreiben. Aus diesem Grund wurde das Konzept der nicht-linearen Zeitreihenanalyse für die Analyse atmosphärischer Winddaten und insbesondere für die Vorhersage nicht-linearer Effekte, wie Windböen, nicht in Betracht gezogen.

Es ist auch bekannt, stochastische Prozesse mit sog. Markov-Regeln zu beschreiben. Bei einem Markov-Prozess m-ter Ordnung genügen die letzten m Messwerte zur Vorhersage der Wahrscheinlichkeitsverteilung des vorherzusagenden Wertes. Im Gegensatz zu deterministischen Prozessen besitzt man bei einem Markov-Prozess also nicht die Kenntnis über den exakten Wert der zukünftigen Beobachtung, sondern lediglich über deren Wahrscheinlichkeitsverteilung.

Starke Änderungen der Windgeschwindigkeit durch Turbulenzen stellen erhebliche Schwierigkeiten bei der Energiegewinnung aus Windenergie dar. Es treten insbesondere die folgenden drei Problemfelder auf. Erstens werden durch die Windböen die mechanische Stabilität der Rotoren gefährdet und die Lebenserwartung der Turbinen erheblich reduziert. Dies gilt vor allem für Windgeneratoren in Mittelgebirgslagen. Sind die Anlagen in ein Stromversorgungsnetz integriert, so können die Böen des Weiteren zu starken Fluktuationen der in das Netz eingespeisten Leistung führen. Es ergibt sich eine verminderte Qualität der im Netz bereitgestellten Spannung. Schließlich tritt vor allem bei dezentral genutzten, isolierten Windkraftanlagen mit zusätzlichen Dieselaggregaten zur konventionellen Energieproduktion bei Windstille eine Versorgungsunsicherheit auf. Falls durch Fluktuationen auf die konventionelle Energieproduktion umgestellt werden muss, erfolgt dies mit einer Verzögerung, da bspw. Dieselaggregate nicht hinreichend schnell reagieren können.

Es besteht daher ein Interesse an der Verarbeitung von Strömungsparametern, um aktuelle Systemzustände erfassen oder in naher Zukunft auftretende Zustände möglichst genau vorhersagen zu können. So werden bspw. Windstromgeneratoren je nach den Wetterverhältnissen bei möglichst hoher Leistung und bis zu möglichst hohen Windgeschwindigkeiten betrieben, um eine optimale Energieumwandlung zu erzielen. Oberhalb einer bestimmten Windgeschwindigkeit muss ein Windstromgenerator jedoch zur Vermeidung von mechanischen Beschädigungen gebremst werden. Dieses Abbremsen erfolgt typischerweise elektrisch durch Regelung des Generatorwiderstandes oder mechanisch durch Verstellen der Rotorblätter des Windstromgenerators. Diese Regelung erfolgt bislang auf der Grundlage der gemessenen momentanen Windgeschwindigkeit bei Notstopps oder auf der Basis der momentanen Leistung des Generators für die permanente Regelung. Die herkömmliche Regelung erfolgt aufgrund der Trägheit des Rotors und wegen Zeitverzögerungen im Mess- und Auswertungssystem immer verspätet. Insbesondere bei Windböen kann dies zu einem starken Anstieg der momentanen mechanischen Belastung der Anlage führen. Könnte man diese abrupten Erhöhungen der Windgeschwindigkeit vorhersagen, so ließe sich die Belastung der Anlage reduzieren und/ oder die Effektivität der Energieumwandlung steigern. Letzteres wäre durch die Betreibung der Anlage bei höherer durchschnittlicher Leistung möglich.

Um auch bei Windböen, also kurzzeitigen turbulenten Erhöhungen der Windgeschwindigkeit, die Sicherheit der Anlage zu gewährleisten, muss das Abbremsen bereits bei einer relativ niedrigen mittleren Windgeschwindigkeit erfolgen. Dies bedeutet im zeitlichen Mittel des Dauerbetriebs eine Beschränkung der Effektivität der Energieumwandlung. Könnte der Strömungszustand der Luft in einer realen Situation genauer erfasst und vorhergesagt werden, so ließe sich die Effektivität der Stromerzeugung sowie die Lebensdauer der Turbine deutlich erhöhen.

Eine Lösung des genannten Problems wäre theoretisch durch direkte Messung der Windgeschwindigkeit mit Abstand vom Windstromgenerator denkbar. Diese Idee weist jedoch in der Praxis einige wesentliche Nachteile auf. Zunächst erfordert sie aufwendige Hardware-Modifikationen. Es wäre ein ganzes Array von Messstationen nötig, da der Wind zu unterschiedlichen Zeiten aus verschiedenen Richtungen und mit verschiedenen mittleren Windgeschwindigkeiten weht. Eine weitere Schwierigkeit dieser Idee liegt in der Tatsache begründet, dass sich hydrodynamische Turbulenz gerade nicht durch eine gerichtete Translation stationärer Ereignisse auszeichnet, sondern ein dynamisches Phänomen ist. Böen können von verschiedenen Richtungen her anlaufen und sich am Ort der Turbine verstärken oder abschwächen.

Der Wunsch nach Erfassung lokaler Turbulenzen in der Atmosphäre besteht nicht nur beim Betrieb und der Netzanbindung von Windstromgeneratoren, sondern auch bei anderen Geräten, die empfindlich auf natürlich (Wind) oder künstlich erzeugte Wirbel oder Turbulenzen reagieren (z. B. im Flughafen- oder Baustellenbereich).

Aus US-A-5 289 041 ist ein Steuersystem für einen Windgenerator bekannt, bei dem Windgeschwindigkeitswerte mit einem Verfahren gemäß dem Oberbegriff von Anspruch 1 verarbeitet und vorhergesagt werden.

Die Aufgabe der Erfindung ist es, ein verbessertes Verfahren zur Verarbeitung von Strömungsparametern anzugeben, das die Feststellung und/oder Vorhersage von Geschwindigkeitsänderungen in strömenden Medien mit erhöhter Vorhersagenauigkeit ermöglicht. Die Aufgabe der Erfindung ist es auch, eine Vorrichtung zur Umsetzung des Verfahrens und Anwendungen bei der Steuerung von Windstromgeneratoren und deren Integration in Stromversorgungsnetze anzugeben.

Diese Aufgaben werden durch Verfahren und Vorrichtungen mit den Merkmalen gemäß den Patentansprüchen 1 bzw. 12 gelöst. Vorteilhafte Ausführungsformen und Anwendungen der Erfindung ergeben sich aus den abhängigen Ansprüchen.

Die Grundidee der Erfindung besteht in der Verarbeitung von Strömungsdaten eines strömenden Mediums mit den folgenden Schritten. Es wird laufend aufeinanderfolgend mindestens ein Strömungsparameter gemessen, der für die Geschwindigkeit des Mediums charakteristisch ist, und aus den Messwerten eine jeweils fortgeschriebene Zeitreihe gebildet, deren letztes Element dem gerade gemessenen Strömungsparameter entspricht. Wenn der oder die Strömungsparameter an einem Ort im Medium gemessen wird, ist die Zeitreihe skalar (univarivate Ausführungsform). Bei Messung an verschiedenen Orten ist die Zeitreihe vektoriell (multivariate Ausführungsform). Jede Zeitreihe wird einer Vorhersageprozedur zur Erzeugung von Vorhersagewerten (oder: Vorhersagedaten) für die jeweils folgenden Strömungsparameter unterzogen. Die Vorhersageprozedur basiert auf dem nicht-linear deterministischen Modell. Aus der Vorhersageprozedur werden Vorhersagewerte zur Charakterisierung des wahrscheinlichen Systemverhaltens in der Folgezeit abgeleitet und/oder für weitere Verarbeitungsschritte bereitgestellt. Wenn die Vorhersagedaten für eine kommende Änderung der Strömungsgeschwindigkeit, z. B. für das kommende Einlaufen einer Turbulenz, charakteristisch sind, wird mindestens ein Steuersignal erzeugt, das angezeigt und/oder zur Auslösung bestimmter Systemreaktionen verwendet wird. Als Kriterium für eine kommende Turbulenz kann die Amplitude der vorhergesagten Geschwindigkeit oder die vorhergesagte Geschwindigkeitsänderung verwendet werden.

Die erfindungsgemäße Steuersignalerzeugung mit dem nicht-linear deterministischen Vorhersagemodell ermöglicht vorteilhafterweise eine deutliche Verringerung des Vorhersagefehlers. Dies stellt ein überraschendes Ergebnis dar, war man doch bisher davon ausgegangen, daß das Vorhersagemodell nicht optimal an die Dynamik von Systemen mit turbulenten Strömungen angepaßt wäre. Es wurde aber festgestellt, daß die im zeitlichen Mittel erheblichen Vorhersagefehler der an sich bekannten Vorhersageprozedur vermindert werden, wenn nur die Vorhersagen im Bereich starker Geschwindigkeitssteigerungen in Betracht gezogen werden oder wenn über mehrere zeitgleiche Vorhersagen gemittelt werden kann.

Ein wichtiger Gesichtspunkt der Erfindung ist die Erkenntnis, dass die hier verwendeten Vorhersagemethoden der nicht-linearen Zeitreihenanalyse auch zur Beschreibung einer bestimmten Klasse stochastischer Prozesse, nämlich Markov-Prozesse, angewendet werden darf. Die Erfindung basiert insbesondere auf der Feststellung, dass erfindungsgemäß verwendete lokal konstante Vorhersagemodelle optimal für die Bestimmung von Markov-Regeln in stochastischen Prozessen geeignet sind. Die Erfinder haben erkannt, dass sich die Inkremente der Windgeschwindigkeiten gut durch nicht-lineare Markov-Prozesse in der Zeit beschreiben lassen und somit Modelle der nicht-linearen Zeitreihenanalyse gut zur Vorhersage der Erwartungswerte der Inkremente geeignet sind. Diese Eigenschaft führt zu besonders vorteilhaftem Verhalten in Situationen, wo mehrere Vorhersagen zum selben Zeitpunkt getroffen werden und über die Vorhersagewerte gemittelt wird. Dies ist z.B. bei der Integration von erneuerbaren Energieträgern in Stromversorgungsnetze der Fall.

Gemäß einer bevorzugten Ausführungsform der Erfindung wird die Bewegung strömender Luftmassen erfasst. Die Strömungsparameter des Mediums Luft (Winddaten) umfassen insbesondere die Windgeschwindigkeit oder davon abgeleitete Größen. Ein für die erfindungsgemäße Vorhersage herangezogener Strömungsparameter auf der Grundlage einer abgeleiteten Größe ist bei Anwendungen an Windstromgeneratoren oder Windkraftanlagen bspw. die am Windstromgenerator erzeugte elektrische Leistung. Dies besitzt den Vorteil, dass die Leistung die räumlich gemittelte Windgeschwindigkeit direkt reflektiert und die übliche Steuerungsgröße der herkömmlichen Steuerung von Windkraftanlagen ist. Als abgeleitete Größe kann auch bspw. die Abweichung eines aktuell gemessenen Wertes der Windgeschwindigkeit vom zeitlichen Mittel verwendet werden. Besonderes Interesse besteht an Vorhersagen von turbulenten Windströmungen (Böen) für kurze Zeiträume (wenige bis z. B. 20 Sekunden) oder allgemein bevorstehenden Geschwindigkeitsänderungen für längere Zeiträume (bis zu einige Minuten).

Gemäß einer bevorzugten Anwendung der Erfindung werden die Vorhersagedaten verwendet, um Betriebsparameter einer im strömenden Medium angeordneten mechanischen Einrichtung, z. B. eines Windstromgenerators, einzustellen oder zu regeln. Bei einem Windstromgenerator ist vorzugsweise die Bereitstellung einer auf dem oben beschriebenen Verfahren basierenden Steuerung vorgesehen. Wenn die Vorhersagedaten des nicht-linear deterministischen Modells eine hohe Windgeschwindigkeit oder Windgeschwindigkeitsänderung ergeben, so wird mit dem genannten Steuersignal eine Stelleinrichtung des Windstromgenerators betätigt, mit der ein zumindest vorübergehendes Abbremsen des Generators ausgelöst wird. Diese Regelung besitzt den Vorteil, dass auf gefährliche Turbulenzen rechtzeitig mit erhöhter Zuverlässigkeit reagiert und damit die mittlere mechanische Belastung der Anlage reduziert werden kann und der Generator bis zu einer höheren mittleren Windgeschwindigkeit betrieben werden kann.

Eine weitere bevorzugte Anwendung der Erfindung betrifft die Integration von erneuerbaren Energiequellen in größere Stromversorgungsnetze. Wenn bspw. eine hohe Anzahl von Windstromgeneratoren Leistung in ein Versorgungsnetz einspeisen und die zukünftig produzierte Leistung vorhergesagt werden soll, ist es weniger wichtig, eine exakte Vorhersage für jede einzelne Turbine zu besitzen, als eine gute Abschätzung des Mittelwertes der vorherzusagenden Leistung zu erhalten. Wenn z.B. eine Erhöhung der Leistungsabgabe um 10% von einer Anzahl von N Generatoren vorhergesagt wird, ist es nicht wichtig, dass die Leistung jeder einzelnen Turbine um 10% steigt. Vielmehr ist es für den Stromversorger von Bedeutung, dass sich die Leistung im Mittel um den vorhergesagten Wert erhöht.

Unter der Annahme, dass die Windgeschwindigkeit einem Markov-Prozess genügt und dass die Markov-Regeln für verschiedene Gruppen von Generatoren identisch sind, ist ein lokal konstantes Modell optimal an das Problem der Vorhersage der mittleren Leistungsabgabe von Windturbinen angepasst.

Gegenstand der Erfindung ist auch eine Vorrichtung zur Strömungsdatenverarbeitung, die zur Ausführung des o. g. Verfahrens eingerichtet ist und insbesondere eine Messeinrichtung zur Erfassung der gewünschten Strömungsparameter, eine Recheneinrichtung zur Erstellung und Verarbeitung der Zeitreihen, eine Vergleichereinrichtung zum Vergleich der Systembedingungen und/oder Vorhersagewerte mit vorbestimmten Referenzkriterien und eine Ausgabeeinrichtung für Vorhersagewerte und/oder davon abgeleitete Steuersignale umfasst.

Die Erfindung wird mit besonderem Vorteil zur Steuerung von Windgeneratoren umgesetzt. Dabei ist auch die besondere Situation in Windfarmen ausnutzbar. In einer Windfarm werden mehrere Windgeneratoren in geringem räumlichen Abstand, typischerweise unter 100 m, betrieben. Diese Generatoren liefern simultan aufgezeichnete Werte der Leistungen bzw. der Windgeschwindigkeit. Diese multivariate, vektorwertige Zeitreihe kann ebenso wie eine einzelne Zeitreihe zur Lösung des oben geschilderten Vorhersageproblems genutzt werden. Gegenstand der Erfindung ist somit auch die Bearbeitung von Strömungsdaten unter Verwendung der gesamten räumlichen Information, wie sie in Windfarmen zur Verfügung steht. Auf die Verarbeitung der vektorwertigen Zeitreihen wird weiter unten eingegangen.

Die Anwendung ist nicht auf bestimmte Zeithorizonte beschränkt. Da die Geschwindigkeitsdaten bei Turbulenzen oder langsameren Geschwindigkeitsänderungen des Windes im Zeitverlauf selbstähnliche Strukturen zeigen können die Prinzipien bei beliebigen Zeithorizonten angewendet werden, wobei ggf. entsprechend angepasst erweiterte Zeitreihen ausgewertet werden.

Die Erfindung besitzt zahlreiche Vorteile, die einerseits unmittelbar mit der Verringerung des Vorhersagefehlers bei der Charakterisierung strömender Medien und andererseits davon abgeleitet mit wirtschaftlichen Vorteilen beim Betrieb technischer Systeme in oder mit den strömenden Medien zusammenhängen. Weitere Vorteile bestehen darin, dass zuverlässige Vorhersagen mit einem relativ geringen Rechenaufwand erzielt werden können, so dass erfindungsgemäße Einrichtungen zur Systemvorhersage oder - steuerung problemlos in vorhandene Systeme integriert werden können.

Weitere Vorteile und Einzelheiten der Erfindung ergeben sich aus der Beschreibung der beigefügten Zeichnungen. Es zeigen:

Figur 1            eine schematische Illustration der erfindungsgemäßen Steuerung eines Windstromgenerators,

Figur 2            eine Kurvendarstellung einer Zeitreihe von Windgeschwindigkeitsdaten,

Figur 3            Kurvendarstellungen zum Vergleich der Vorhersagefehler verschiedener Vorhersagemodelle,

Figur 4            eine Kurvendarstellung zur Abhängigkeit des Vorhersagefehlers des nicht-linear deterministischen Modells von der aktuellen Windgeschwindigkeitsänderung,

Figuren 5a-d    Kurvendarstellungen zur weiteren Charakterisierungen der Vorhersagemodelle,

Figur 6    eine Kurvendarstellung des Zeitverlaufes einer Windböe,

Figur 7    ein Flussdiagramm zur Illustration einer Ausführungsform der Erfindung,

Figur 8    ein Diagramm zur Klassifizierung von Windböen,

Figur 9    eine Schemadarstellung der Aufnahme von Strömungsdaten bei Verarbeitung multivariater Zeitreihen, und

Figur 10 a-d    Kurvendarstellungen zur Illustration von Vorteilen des erfindungsgemäßen Verfahrens.

Die Erfindung wird im Folgenden unter Bezug auf Anwendungen bei der Böenvorhersage in bodennahen Luftströmungen erläutert, ohne jedoch darauf beschränkt zu sein. Die Erfindung ist mit angepassten Messverfahren, Referenzkriterien und dgl. analog bei der Turbulenzvorhersage in anderen gasförmigen oder auch flüssigen Medien anwendbar, sofern das jeweilige System entsprechende kohärente nicht-lineare Effekte zeigt.

Die folgende Erläuterung bezieht sich auf eine Umsetzung des erfindungsgemäßen Verfahrens, bei der als Strömungsparameter die gemessene Windgeschwindigkeit verwendet wird. Die Realisierung der Erfindung auf der Grundlage von Zeitreihen der an einem Windstromgenerator gemessenen elektrischen Leistung erfolgt jeweils analog.

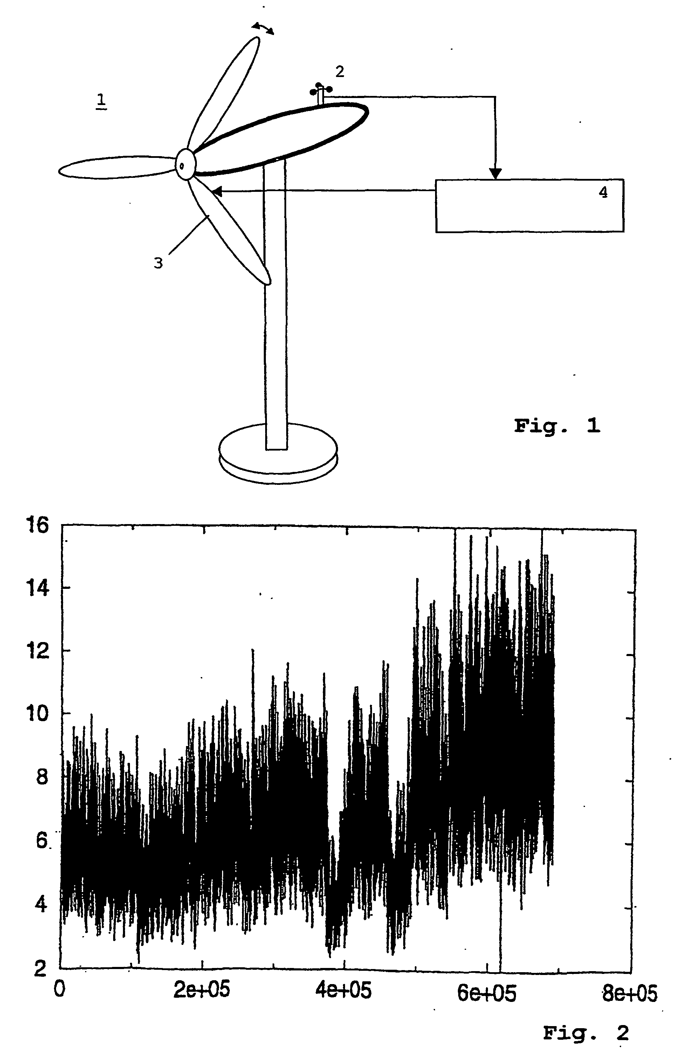

Die mit einem Schalenkreuz-Windmesser 2 eines Windgenerators (siehe Figur 1) über vierundzwanzig Stunden aufgenommenen Windgeschwindigkeiten in einer ebenen, küstennahen Landschaft sind beispielhaft in Figur 2 gezeigt. Der Windmesser war in einer Höhe von zehn Metern über dem Boden angebracht und wurde mit einer Abtastrate von 8 Hz abgefragt. Die Messwerte ergeben eine Zeitreihe, die auf allen Zeitskalen stochastisch strukturiert ist. Die gemessenen Werte der Windgeschwindigkeit bilden die beim erfindungsgemäßen Verfahren verarbeiteten Strömungsparameter. Die Windgeschwindigkeiten sind skalare Größen $S_n$, die eine Zeitreihe $\{S_k\}$ bilden. Die Darstellung der im gleichen Zeitbereich gemessenen elektrischen Leistung des Generators würde ein ähnliches Bild wie in Figur 2 ergeben. Die Messwerte der elektrischen Leistung sind entsprechend skalare Größen, die eine Zeitreihe bilden. Bei abgewandelten Anwendungen der Erfindung können die Elemente der Zeitreihen auch vektorielle Größen sein. Zur Analyse von Zeitreihen stehen die folgenden Vorhersagemodelle zur Verfügung.

Illustration und Vergleich der Vorhersagemodelle

(i) Zur herkömmlichen linear-stochastischen Vorhersage wird bspw. ein autoregressives Modell (AR-Modell) verwendet. Beim AR-Modell ist der gegenwärtige oder jüngste Wert einer Zeitreihe gemäß Gleichung (1) die Summe aus einer Linearkombination von früheren Werten und einem additivem Rauschen.

$$s_n = \sum_{j=1}^{M_{AR}} A_j s_{n-j} + b + \eta_n \qquad\qquad (1)$$

Dabei sind $M_{AR}$ die Ordnung oder Dimension des AR-Modells, $A_j$ und b die Parameter der Linearkombination, j und n natürliche Zahlen zur Benennung des jeweiligen Zeitreihenwertes und $\eta_n$ den Rauschanteil entsprechend einem weißen Gauss-Rauschen. Die Parameter des AR-Modells werden gemäß Gleichung (2) durch die Minimierung des Vorhersagefehlers ermittelt, wobei dann der Index k in Gleichung (2) über die gesamte Trainingsmenge läuft. Die Trainingsmenge kann im Rahmen eines adaptiven AR-Modells variiert werden und umfasst bei den hier betrachteten Beispielen die letzten sieben Stunden der Zeitreihe. Die Ordnung $M_{AR}$ der Modelle muss anwendungsabhängig je nach der Aufgabenstellung gewählt werden. Linear-stochastische Modelle, wie z. B. das AR-Modell, sind an sich bekannt.

In einem multivariaten AR-Modell können die Werte $S_n$ auch Messwerte anderer Größen sein, z.B. die Windgeschwindigkeit an anderen Messorten.

Ein essentiell lineares Verfahren ist auch durch den bekannten, sogenannten Kallman-Filter gegeben, der jedoch keine Trennung von Systemzuständen im nicht-linear deterministischen Sinne erlaubt.

(ii) Bei der erfindungsgemäß verwendeten nicht-linear deterministischen Vorhersage wird das Verhalten der Zeitreihe als Ergebnis eines nicht-linearen deterministischen chaotischen Prozesses verstanden. Dabei sind Kurzzeitvorhersagen prinzipiell möglich, obwohl die gemessenen Zeitreihen, z. B. die Windgeschwindigkeit oder die elektrische Leistung, unregelmäßig und stochastisch erscheinen. Der Kern der nicht-linearen deterministischen Vorhersage ist das Prinzip der Analogie. Die Erfinder haben festgestellt, dass bei der erfindungsgemäßen Verarbeitung von Strömungsdaten von der Feststellung ausgegangen werden kann, dass die zu bestimmende Fortsetzung der aktuellen Messreihe ähnlich den Beobachtungen sein wird, die in einer vergangenen ähnlichen Situation gewonnen wurden. Den hier verwendeten Begriffen "Situation" und "ähnlich" kann mit dem erfindungsgemäßen Verfahren eine quantitative und algorithmisch nutzbare Bedeutung zugeordnet werden. Eine Situation ist charakterisiert durch die Wellenform der Kurve des jeweils verarbeiteten Strömungsparameters während eines geeignet gewählten Zeitintervalls. Die Ähnlichkeit von Situationen lässt sich dann mit Standardabstandsmaßen quantifizieren.

Bei der erfindungsgemäßen Prozedur wird wie folgt vorgegangen. In der gesamten verfügbaren Datenmenge (gemessene Zeitreihen) wird nach Kurvenverläufen gesucht, die dem Verlauf in den letzten Sekunden vor einem momentan betrachteten Zeitpunkt hinreichend ähneln. Eine Vorhersage für die weitere Entwicklung des betrachteten Strömungsparameters (z. B. Windgeschwindigkeit oder Leistungsabgabe) in den folgenden Sekunden wird dann durch ein gewichtetes Mittel über die entsprechend folgenden Abläufe der ähnlichen Kurvenverläufe in der Vergangenheit gewonnen. Formal wird das Verfahren durch die Rekonstruktion von Trajektorien der deterministischen Dynamik in n-dimensionalen Räumen beschrieben. Aus aufeinander folgenden Datenpunkten $s_i$ zu den Zeiten i werden sog. n-dimensionale Einbettungsvektoren oder Zeitversatzvektoren (siehe unten) gebildet. Diese Vektoren beschreiben Zustände in einem n-dimensionalen Phasenraum, der hier auch als Zustandraum bezeichnet wird. Aufeinander folgende Zustände bilden die Trajektorien. Das erfindungsgemäß verwendete Konzept des Determinismus basiert auf der Verfolgung dieser Trajektorien in die Zukunft hinein.

Die Zustände x eines dynamischen Systems werden durch eine Bewegungsgleichung gemäß $x_{n+1} = F(x_n)$ in einem Zustandsraum beschrieben. Die Bewegungsgleichung bzw. nicht-lineare Abbildung ist in der Regel eine komplizierte Differentialgleichung. Falls die Funktion F nicht bekannt ist, kann sie jedoch aus langen Zeitreihen von Zuständen $\{x_k\}$, k = 1,...,N, durch Betrachtung sämtlicher Zustände $y_k$ in einer Umgebung (oder: Nachbarschaft) $U_n$ eines Zustands $x_n$ und Minimierung der Funktion (2) linear angenähert werden.

$$\varepsilon_n^2 = \sum_{k:y_k \in U_n} \left(A_n y_k + b_n - y_{k+s}\right)^2 \qquad (2)$$

Die Größe $\varepsilon^2$ stellt einen Vorhersagefehler in Bezug auf die Faktoren $A_n$ und $b_n$ dar. Der implizite Ausdruck $A_n y_k + b_n - y_{k+s} = 0$ illustriert, dass die Werte, die der oben genannten Bewegungsgleichung entsprechen, auf eine Hyperebene innerhalb des betrachteten Zustandsraumes beschränkt sind. Der Vorhersagefehler kann entsprechend dem von J. D. Farmer (siehe oben) beschriebenen Verfahren ("Farmer-Sidorowich-Verfahren") minimiert werden. Die Faktoren der Linearkombination bei minimalem Vorhersagefehler erlauben wiederum die Ermittlung des Vorhersagewertes $x_{n+s}$ aus der vorhergehenden Zeitreihe.

Das Verfahren, das bei der Umsetzung der Erfindung im univariaten Fall verwendet wird, basiert auf der Tatsache, dass bei den vorliegenden Zeitreihen aus Winddaten nur eine Folge von Skalarwerten $s_n$ aufgezeichnet wird. Aus diesen werden die zu rekonstruierenden Phasenraumvektoren mit dem Konzept der Zeitversatzvektoren ermittelt, wie es im Einzelnen von F. Takens unter dem Titel "Detecting Strange Attractors in Turbulence" in "Lecture Notes in Math", Bd. 898, Springer, New York, 1981, oder von T. Sauer et al. in "J. Stat. Phys.", Bd. 65, 1991, S. 579, und illustrativ im Folgenden beschrieben wird.

Ausgehend von einer skalaren Zeitreihe $\{S_k\}$ werden Zeitversatzvektoren in einem m-dimensionalen Raum gemäß $S_n = (S_n, S_{n-\tau},..., S_{n-(m-1)\tau})$ gebildet (n: laufender Index der Zeitreihe). Wenn eine multivariate Zeitreihe gemessen wird, kann $S_n$ auch aus den verschiedenen Komponenten der vektorwertigen Zeitreihe gebildet werden. Der Parameter m ist die Einbettungsdimension der Zeitversatzvektoren. Die Einbettungsdimension wird anwendungsabhängig gewählt und ist größer als der doppelte Wert der fraktalen Dimension des Attraktors des betrachteten dynamischen Systems. Der Parameter $\tau$ ist ein Abtastabstand (oder: "time lag"), der den zeitlichen Abstand der aufeinanderfolgenden Elemente der Zeitreihe darstellt. Der Zeitversatzvektor ist somit ein m-dimensionaler Vektor, dessen Komponenten einen bestimmten Zeitreihenwert und die (m-1) vorhergehenden Zeitreihenwerte umfassen. Er beschreibt die zeitliche Entwicklung des Systems während eines Zeitbereichs oder Einbettungsfensters der Dauer $m \cdot \tau$. Mit jedem neuen Abtastwert verschiebt sich das Einbettungsfenster innerhalb der gesamten zeitlichen Entwicklung jeweils um einen Abtastabstand. Der Abtastabstand $\tau$ ist wiederum eine anwendungsabhängig gewählte Größe. Falls sich das System wenig ändert, kann der Abtastabstand größer gewählt werden, um die Verarbeitung redundanter Daten zu vermeiden. Falls sich das System schnell ändert, muss der Abtastabstand geringer gewählt werden, da andernfalls die Korrelationen, die zwischen benachbarten Werten auftreten, Fehler in die weitere Verarbeitung einführen würden. Die Wahl des Abtastabstandes $\tau$ ist somit ein Kompromiss zwischen der Redundanz und der Korrelation zwischen aufeinanderfolgenden Zuständen. Zur Turbulenzvorhersage werden die Parameter m und $\tau$ in geeigneter Weise nach den Prinzipien, die von J. F. Gibson et al. in "Physica D", Band 57, 1992, Seite 1 ff. beschrieben werden, gewählt.

Der Vorhersagewert $x_{n+s}$ kann nach Gleichung (2) aus der lokallinearen Approximation der nicht-linearen Funktion F ermittelt werden. Danach gilt in linearer Näherung $x_{n+s} = A_n \cdot x_n + b_n$. Wesentlich ist hierbei, dass die $A_n$ und $b_n$ von der jeweiligen lokalen Nachbarschaft $U_n$ abhängen und nicht wie beim AR-Modell für die gesamte Zeitreihe konstant sind. Erfindungsgemäß wird als nullte Näherung ein lokal konstantes Phasenraummodell betrachtet. Mit dem lokal konstanten Modell ist der Vorhersagewert $x_{n+s}$ einfach der Mittelwert aus den Folgewerten der Phasenraumnachbarn $y_n$ eines Zustands $x_n$ gemäß

$$x_{n+s} \quad = \quad \sum_{k:y_k \in U_n} y_{k+s}$$

Wird anstelle einer skalaren Zeitreihe eine vektorwertige Zeitreihe gemessen, so können die einzelnen Komponenten des Phasenraumvektors auch aus den Komponenten der vektorwertigen Zeitreihe (z. B. Windgeschwindigkeiten, die an verschiedenen benachbarten Generatoren gemessen worden sind) gebildet werden. Es ist auch eine Kombination von Zeitversatzeinbettung und Nutzung der vektorwertigen Information der Zeitreihe möglich.

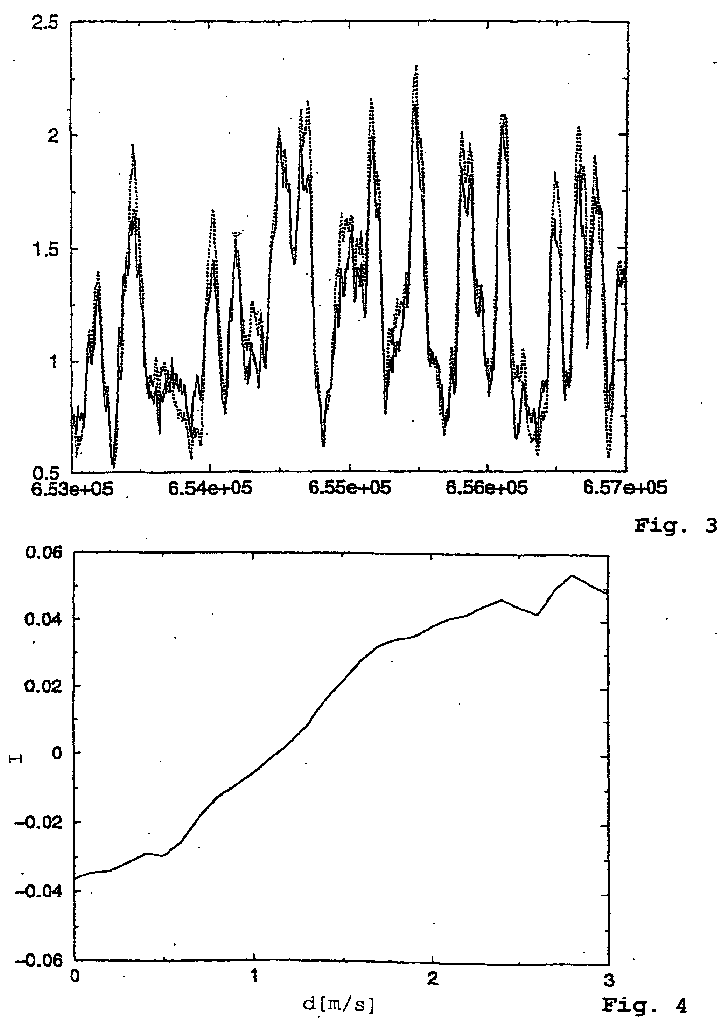

(iii) Die Anwendung der genannten Vorhersagemodelle zur Turbulenzvorhersage an einer univariaten Zeitreihe von Winddaten ist in Figur 3 ausschnittsweise illustriert. Für das linear-stochastische AR-Modell wurde $M_{AR} = 20$ und für die nicht-linear deterministische Analyse wurde $\tau = 0{,}125$ s und ein 20-dimensionaler Verzögerungsvektor gewählt. Es wurden mindestens fünfzig Nachbarwerte berücksichtigt. Die Vorhersagezeit beträgt vierzig Messschritte bzw. fünf Sekunden. Diese Parameter werden nur beispielhaft gegeben. Je nach der Situation können die Parametereinstellungen variiert werden.

Figur 3 zeigt den aus der Zeitreihe gemäß Figur 2 ermittelten Vorhersagefehler für beide Modelle in Abhängigkeit von der Zeit. Es ist erkennbar, dass das (globale) linear-stochastische Modell (gestrichelt gezeichnet) bei geringen Vorhersagefehlern, wenn das System in einem nicht-turbulenten Zustand ist, ähnliche oder bessere Ergebnisse im Vergleich zum (lokalen) nicht-linear deterministischen Modell (durchgezogen gezeichnet) liefert. Geringe Vorhersagefehler bedeuten geringe Windgeschwindigkeitsänderungen, so dass die Minima in der Kurvendarstellung gemäß Figur 3 den nicht-turbulenten Bereichen entsprechen. Andererseits ergibt in turbulenten Bereichen bei großen Vorhersagefehlern das nicht-linear deterministische Modell wesentlich bessere, d. h. relativ geringere, Vorhersagefehler als das linear-stochastische Modell.

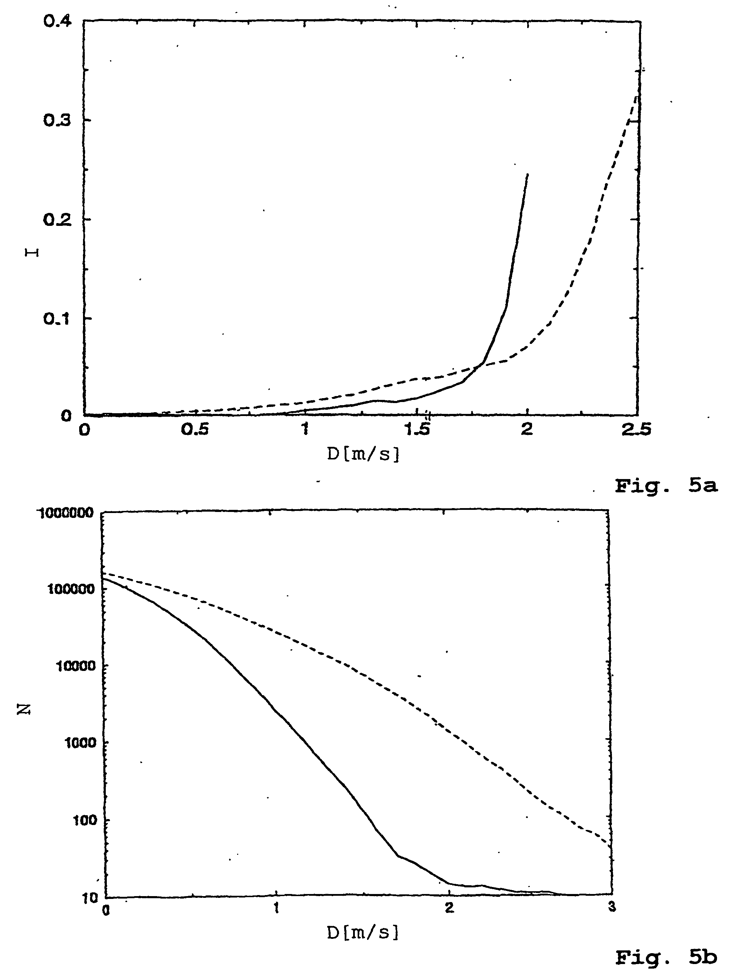

Auf diesem Befund basiert das erfindungsgemäße Verfahren. Aus den gemessenen Zeitreihen von Winddaten (z. B. Windgeschwindigkeiten) werden laufend Vorhersagewerte als Differenzwerte zwischen den vorhergesagten Daten und der Persistenz ermittelt. Je nachdem, ob der aktuelle Vorhersagewert unterhalb oder oberhalb einer anwendungsabhängig eingestellten Grenze (Schwellwert) liegt, wird eine Böe vorhergesagt bzw. ein Steuersignal erzeugt. Allgemein ist vorgesehen, dass das Steuersignal erzeugt wird, wenn die Abweichung des Vorhersagewertes einer Zeitreihe vom aktuellen Wert des betrachteten Signals größer als der Schwellwert ist (siehe auch Figuren 5a bis c). Der Schwellwert zur Böenvorhersage liegt beispielsweise im Bereich von 1 bis 2 m/s.

Das in Figur 3 illustrierte Ergebnis wird auch durch die Figuren 4, 5a und 5b bestätigt. Figur 4 zeigt die relative Verbesserung des nicht-linearen deterministischen Modells im Vergleich mit dem linear-stochastischen Modell, die durch den Parameter I = ($\varepsilon_{AR}$ - $\varepsilon_{NL}$) /$\sigma$ beschrieben wird, in Abhängigkeit von der Abweichung d des vorherzusagenden Wertes von der Persistenz. Dabei sind $\varepsilon_{AR}$ der Vorhersagefehler des AR-Modells und $\varepsilon_{NL}$ der Vorhersagefehler des nicht-linearen Modells. Die Einheit der Größe d ist entsprechend dem gemessenen Geschwindigkeitssignal [m/s]. Bei geringen d-Werten ist der Parameter I der Verbesserung negativ, d. h. das linear-stochastische Modell liefert eine bessere Vorhersage als das nicht-lineare deterministische Modell. Bei großen d-Werten ist das Verhältnis umgekehrt.

Figur 5a zeigt den Parameter I des mittleren relativen Unterschieds (Verbesserung der Vorhersage) in Abhängigkeit von verschiedenen Schwellwerten D bei Vorhersagen des jeweiligen Folgewertes mit dem linear-stochastischen Modell (durchgezogen gezeichnet) bzw. mit dem nicht-linear deterministischen Modell (gestrichelt gezeichnet). Insbesondere für vorhergesagte große Steigerungen der Windgeschwindigkeit ist die erfindungsgemäße Vorhersageverbesserung unter Verwendung des nicht-linearen Modells in der Größenordnung der Varianz der Daten. Dies stellt einen wesentlichen Vorteil der Erfindung dar.

In Figur 5b ist die Gesamtzahl N von Situationen, in denen das Steuersignal korrekterweise erzeugt bzw. die Böe korrekterweise vorhergesagt wird, in Abhängigkeit vom Schwellwert D illustriert. Es zeigt sich, dass kleine Geschwindigkeitsänderungen, die relativ häufig auftreten, gewöhnlich durch beide Modelle vorhergesagt werden. Die Mehrzahl der großen Schwankungen wird jedoch nur durch das nicht-linear deterministische Modell vorhergesagt. Auf diesem Ergebnis basiert die erfindungsgemäße Verwendung des nicht-linearen Modells zur Vorhersage von Windböen.

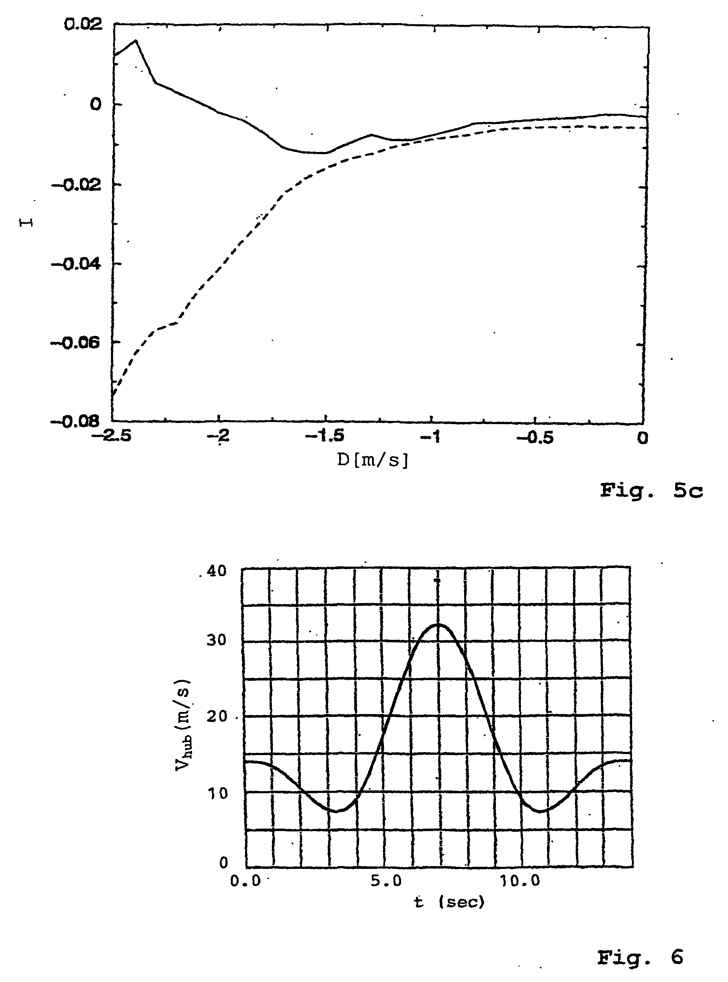

Bei negativen Geschwindigkeitsänderungen, d. h. bei einer Verringerung der Windgeschwindigkeit, ergibt sich ein anderes Verhalten, das in Figur 5c illustriert ist. Beim Abflauen des Windes wird keine Verbesserung des deterministischen Modells gegenüber dem stochastischen Modell erzielt.

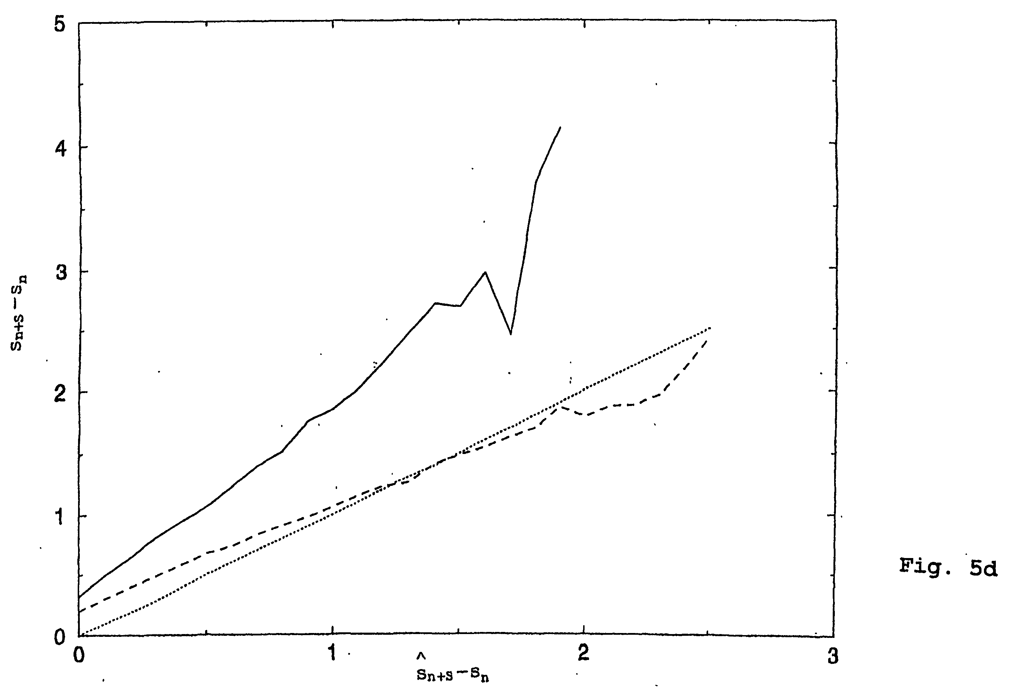

Figur 5d zeigt, dass ein lokal konstantes Modell tatsächlich den Erwartungswert der positiven Geschwindigkeitsänderung sehr genau vorhersagt, wogegen ein lineares Modell die Geschwindigkeitsänderungen systematisch unterschätzt. Hierzu ist in Figur 5d die tatsächliche mittlere Geschwindigkeitsänderung $s_{n+S} - S_n$ gegenüber der vorhergesagten Erhöhung der Geschwindigkeit $S_{n+S} - S_n$ aufgetragen. Die gestrichelte Linie entspricht der Beobachtung für das lokal konstante Modell und die durchgezogene Linie der für das lineare Modell. Außerdem ist die Diagonale eingezeichnet, auf der die mittleren Geschwindigkeitsänderungen idealerweise liegen sollten. Es wird deutlich, dass die mittleren Geschwindigkeitsfluktuationen wesentlich stärker sind als durch ein lineares Modell vorhergesagt. Die gute Vorhersage der mittleren Fluktuationen durch das lokal konstante Modell zeigt, dass die turbulenten Geschwindigkeitsfluktuationen tatsächlich der Markov-Eigenschaft genügen.

Steuerung eines Windgenerators

Im vorhergehenden Abschnitt wurde gezeigt, dass mit dem nicht-linear deterministischen Vorhersagemodell die Vorhersage wesentlich verbessert werden kann. Als Auslöser für die Böenvorhersage kann neben der erwähnten Vergrößerung des Vorhersagewertes über einen vorbestimmten Grenzwert alternativ auch der (vorhergesagte) Zeitverlauf der Windgeschwindigkeit an sich verwendet werden. Letzteres basiert auf der Feststellung typischer Geschwindigkeitsverläufe beim Aufbau einer Turbulenz oder Böe.

Ein typischer Geschwindigkeitsverlauf von Windböen ist zur Illustration in Figur 6 dargestellt (siehe "Wind Conditions for Wind Turbine Design", International Energy Agency, 2nd Symposium, April 1999, ISSN 0590-8809). Ausgehend von einer mittleren Geschwindigkeit ergeben sich zunächst ein Minimum, dann ein Anstieg zu einem starken Maximum mit einem erneuten Abfall zu einem Minimum und schließlich ein Anstieg zu der mittleren Geschwindigkeit. Der für die Vorhersage interessierende Zeitbereich kann bei der Turbulenzvorhersage der Durchlauf des ersten Minimums sein. In diesem Zeitbereich verändert sich der oben genannte Zeitversatzvektor in bestimmter Weise. Sobald dies durch Vergleich mit den Nachbarn im Phasenraum festgestellt wird, erfolgt die Böenvorhersage. Eine Böenvorhersage kann aber auch auf anderen Zeitbereichen basieren.

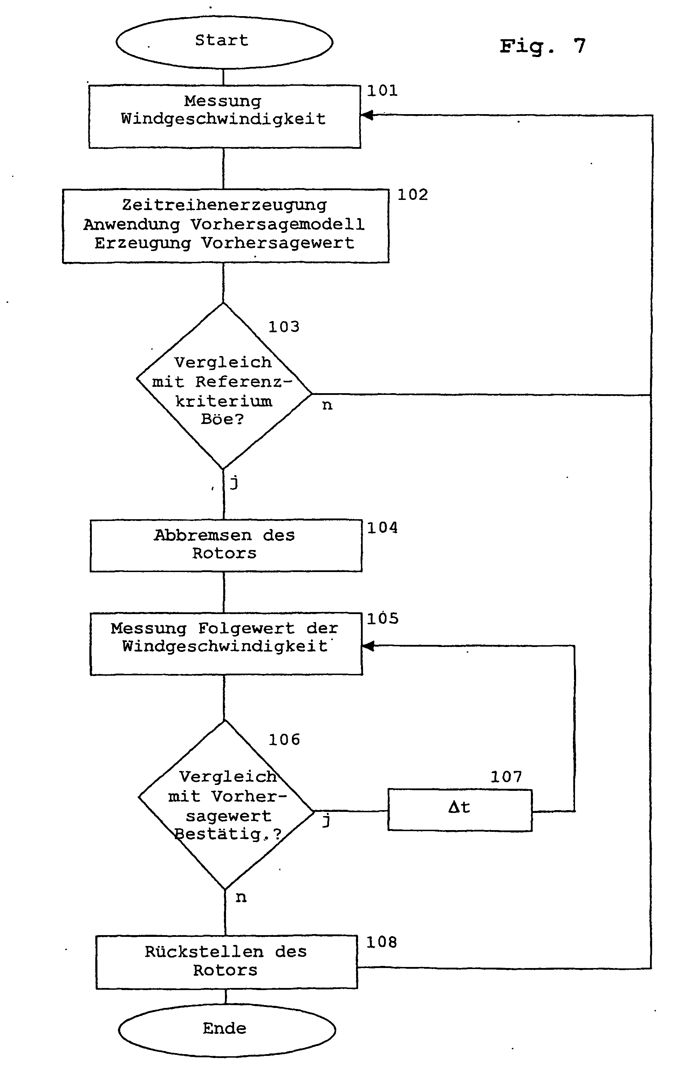

Zur Steuerung eines Windgenerators 1, der schematisch in Figur 1 dargestellt ist, wird laufend mit einem Windmesser 2 die Windgeschwindigkeit oder mit einem Leistungsmesser die Leistung des. Windgenerators gemessen, die gemessenen Geschwindigkeits- oder Leistungsdaten mit dem unten unter Bezug auf Figur 7 erläuterten Verfahren ausgewertet und eine Verstellung der Betriebsparameter des Windgenerators 1 nach Vorhersage einer Böe vorgenommen. Ein Verstellen der Betriebsparameter bedeutet, dass bspw. die Anstellwinkel der Rotorblätter 3 verändert (z. B. um 1°) oder die Rotorgeschwindigkeit elektrisch abgebremst wird. Zur Durchführung des Verfahrens gemäß Figur 7 ist eine Einrichtung 4 zur Verarbeitung der Winddaten vorgesehen, deren Einzelheiten unten genannt werden.

Gemäß dem Flussdiagramm in Figur 7 erfolgt laufend eine Messung der Windgeschwindigkeit mit dem Windmesser 2 (Schritt 101). Die Windgeschwindigkeit oder davon abgeleitete Größen, wie z. B. die gemessene elektrische Leistung, die Änderung der Windgeschwindigkeit oder Zeitversatzvektoren aus den Zeitreihen, werden bei Schritt 102 einer Verarbeitung zur Erstellung eines charakteristischen Vorhersagewertes unterzogen, der bei Schritt 103 mit einem vorbestimmten Referenzkriterium (Schwellwert) verglichen wird. Die Winddatenverarbeitung bei Schritt 102 wird vorzugsweise unter Verwendung eines sog. Box-Algorithmus ausgeführt (siehe H. Kantz et al. in "Nonlinear Time Series Analysis", Cambridge University Press, Cambridge, 1997, Kapitel 4), mit dem die Zahl der in Echtzeit auszuwertenden Daten von ca. 150.000 auf einige hundert Punkte reduziert werden. Der Box-Pilgorithmus ist ein Algorithmus zur schnellen Nachbarsuche in n-Dimensionen ("box assisted search").

Wenn der Schwellwertvergleich 103 die Vorhersage geringer Windgeschwindigkeiten oder niedrigen Turbulenzen ergibt, so erfolgt der Rücksprung zu Schritt 101. Wenn jedoch der Schwellwertvergleich 103 eine starke Abweichung von der Persistenz oder von niedrig-turbulenten Zuständen ergibt, so wird das Steuersignal zum Abbremsen des Windgenerators erzeugt (Schritt 104). Bei abgewandelten Anwendungen kann auch die Erzeugung eines Warn- oder Anzeigesignals vorgesehen sein. Anschließend erfolgt eine erneute Geschwindigkeitsmessung 105 und bei Schritt 106 ein Vergleich mit dem Vorhersagewert.

Wird beim Vergleich 106 die vorhergesagte Böe bestätigt, so folgt ein Warte- oder Verzögerungsschritt 107. Während des Schrittes 107 wird der Generator im abgebremsten Zustand betrieben. Dies erfolgt entsprechend Erfahrungswerten in einem Zeitbereich von ca. 1 bis 5 Sekunden. Anschließend erfolgt ein Rücksprung zu Schritt 105. Wird beim Vergleich 106 die vorhergesagte Böe nicht bestätigt, so erfolgt bei Schritt 108 die Rückstellung des Generators in den nicht-abgebremsten Zustand und der Rücksprung zur Schritt 101.

Zur Umsetzung dieser Prozedur enthält die Einrichtung 4 (siehe Figur 1) eine Recheneinheit zur Ermittlung des Vorhersagewertes (Schritt 102), eine Vergleichereinheit zur Umsetzung des Vergleichsschrittes 103 und zur Vorhersage einer Windböe, eine Stelleinrichtung zum Abbremsen (104) des Generators, und eine weitere Vergleichereinheit (Schritt 106) mit einer Taktschaltung (Schritt 107). Die Stelleinrichtung umfasst insbesondere Stellantriebe zur Veränderung des Anstellwinkels der Generatorflügel 3 oder elektrische Stelleinrichtungen zur Erhöhung des elektrischen Widerstandes des Generators. Diese Stelleinrichtungen werden durch elektronische Regelkreise zur verstärkten Leistungsauskopplung aus dem Generator gebildet.

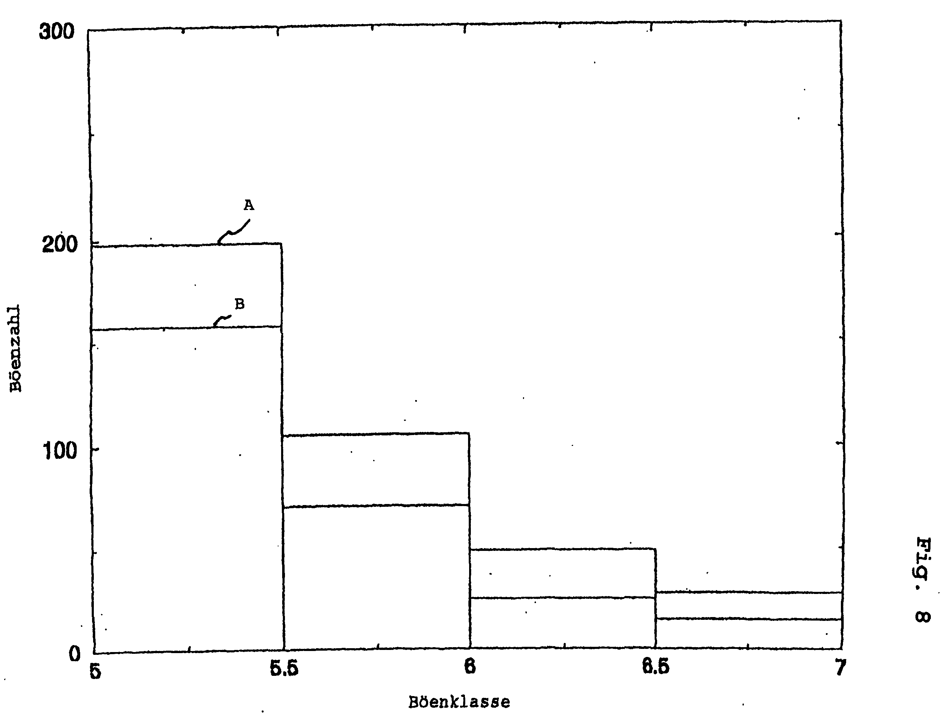

Die Windböen können entsprechend bestimmter Geschwindigkeitskriterien in verschiedene Böenklassen (z. B. von 1 bis 10) eingeteilt werden. Figur 8 verdeutlicht einen wichtigen Vorteil der Erfindung anhand der Anzahl der in verschiedenen Böenklassen vom Windgenerator erfassten Windböen. Wird eine Windböe in einer Klasse mit dem erfindungsgemäßen Verfahren korrekt vorhergesagt, so wird der Windgenerator rechtzeitig abgebremst. Es erfolgt keine ggf. gefährliche Erhöhung der Umlaufgeschwindigkeit des Rotors, d. h. die Windböe wird vom Generator nicht erfasst. Die Zahl der erfassten Windböen wird in jeder Böenklasse erheblich vermindert (A: Anzahl ohne Vorhersagemodell, B: Anzahl mit erfindungsgemäß angewendetem Vorhersagemodell).

In allen Böenklassen werden weniger Böen erfasst. In den Klassen mit den höchsten Windgeschwindigkeiten, die also besonders gefährlich sind, kann die Zahl der erfassten Böen auf Null reduziert werden. Dementsprechend kann der Windgenerator bei einer mittleren Umlaufgeschindigkeit betrieben werden, die einen geringeren Sicherheitsabstand zu den gefährlichen Böenwerten lässt. Es ergibt sich eine erhöhte Effektivität des Generatorbetriebs. Die Effektivitätserhöhung kann wie folgt abgeschätzt werden. Mit der Windgeschwindigkeit steigt die Generatorleistung typischerweise mit $v^3$. Wird der Windgenerator im zeitlichen Mittel mit einer stärkeren Anstellung der Rotorblätter betrieben, so ergibt sich eine entsprechende Steigerung der elektrischen Leistung.

(iv) Im Folgenden wird die Anwendung der genannten Vorhersagemodelle zur Turbulenzvorhersage an einer multivariaten Zeitreihe von Winddaten erläutert. Während bei der univariaten Version lineare Korrelationen des Vorhersagewertes zu mehreren Werten der Zeitreihe in der Vergangenheit ermittelt werden, ist das multivariate Verfahren auf die Auswertung von Korrelationen des Vorhersagewertes mit Werten der Windgeschwindigkeit und -richtung an verschiedenen Raumpunkten gerichtet. Die räumlichen Korrelationen können dabei von der jeweiligen Windrichtung abhängig sein.

Die nicht-linearen Phasenraummethoden sind geeignet, Nichtstationaritäten implizit zu verarbeiten und dynamisch verschiedenartige Situationen voneinander zu trennen. Diese Eigenschaft verleiht den nicht-linear deterministischen Verfahren eine deutliche Überlegenheit gegenüber linearen Ansätzen in Wettersituationen, in denen beispielsweise die Windgeschwindigkeit variiert. Dies basiert auf der Tatsache, dass zur Abschätzung des Zukunftswertes der Windgeschwindigkeit nur Wettersituationen aus der Vergangenheit berücksichtigt werden, die der aktuellen Situation ähnlich sind, wenn beispielsweise dieselbe mittlere Windrichtung vorherrscht.

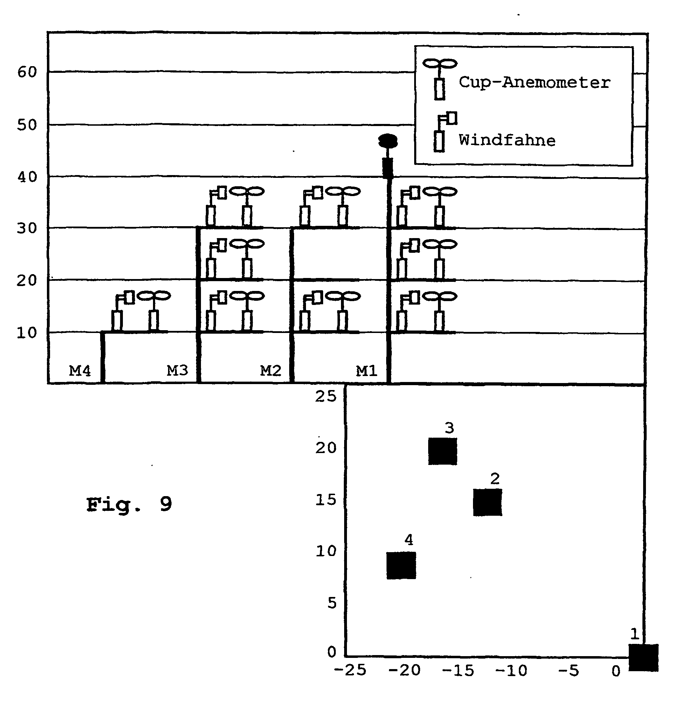

Zur quantitativen Analyse dieses Phänomens wurde eine multivariate Zeitreihe mit 9 simultanen Messungen der Windgeschwindigkeit und 9 Messungen der Windrichtung verwendet. Es ergeben sich 18-dimensionale Einbettungsvektoren bzw. ein AR-Modell der Ordnung 18. Die Messanordnung ist schematisch in Figur 9 illustriert. Die Windgeneratoren sind flächig in verschieden ausgerichteten Reihen angeordnet. Der Vorhersagefehler wurde für 30000 Zeitpunkte, also etwa 1 Stunde der Zeitreihe ausgewertet. Als Trainingsintervall wurde ein Tag der Zeitreihe verwendet. Bei Vorhersagehorizonten ab etwa 10 Sekunden beträgt die Verbesserung etwa 5%. Der genaue Wert der Verbesserung hängt von der Art der betrachteten Wettersituation ab. In Situationen mit starken Schwankungen der Windrichtung ist die Überlegenheit der nicht-linearen Methoden größer als in Situationen, in denen die Windrichtung annähernd konstant ist. Da die Stärke der Nichtstationarität des Wetters von den jeweiligen geographischen und orographischen Bedingungen abhängt, wird auch die spezifische Leistungsfähigkeit der nicht-linearen Methoden für jeden räumlichen Standort der Anwendung neu zu ermitteln sein.

Bei der multivariaten Vorhersage von Windgeschwindigkeiten können nicht-lineare Verfahren deutlich überlegen sein. Die genaue Größe der Überlegenheit und der ideale Zeithorizont einer nicht-linearen Vorhersage hängen jedoch noch von der betrachteten Wettersituation, der geographischen Lage und der räumlichen Anordnung der Messinstrumente ab. Beispielsweise ergaben sich bei einem räumlichen Abstand der Sensoren im Bereich von etwa 30 m Vorhersagehorizonte im Sekundenbereich. Bei Zeithorizonten im Minuten- bis Stundenbereich werden Messungen in größerem räumlichen Abstand durchgeführt.

Die verbesserten Vorhersagen mit dem multivariaten, nicht-linear deterministischen Modell können zur permanenten oder zeitweisen Steuerung verschiedener technischer Abläufe genutzt werden. So können bei der Windenergieumwandlung technische Parameter der Turbine oder ein zusätzliches Dieselaggregat gesteuert werden. Wird eine gesteigerte Windgeschwindigkeit vorhergesagt, ist eine erhöhte Leistung der Windgeneratoren zu erwarten, so dass parallel oder ergänzend betriebene konventionelle Generatoren mit geringerer Leistung betrieben werden können (bzw. umgekehrt). Auf einem größeren Zeithorizont ist auch die Steuerung konventioneller Kraftwerke möglich. Diese Steuerung kann permanent erfolgen oder nur bei vorhergesagten starken Änderungen des Strömungsparameters.

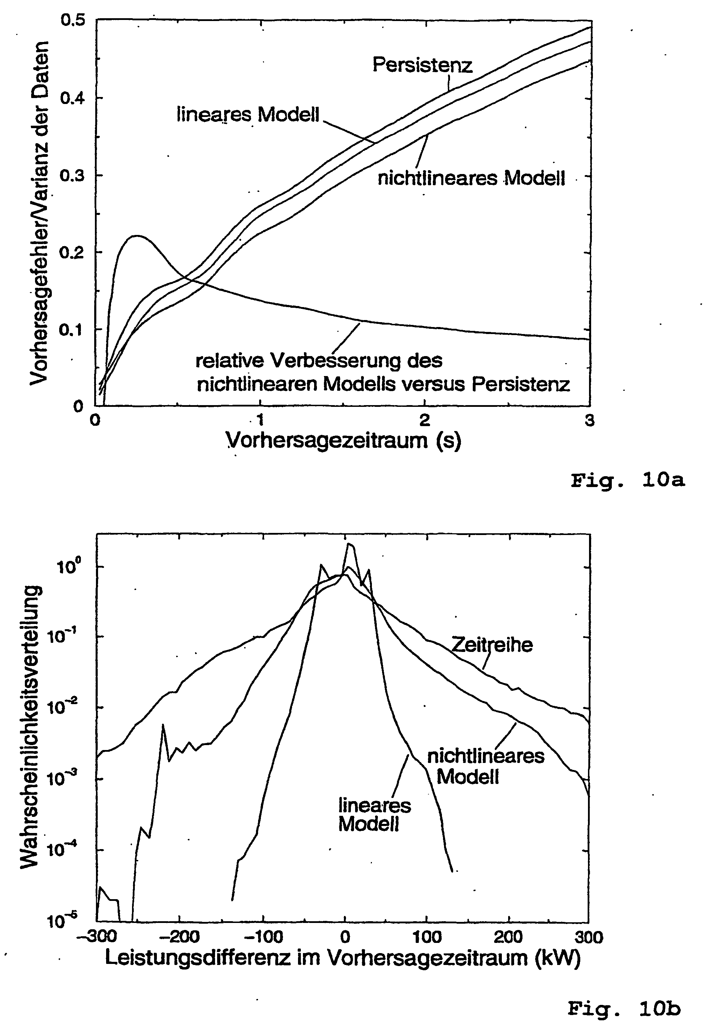

(v) Der Vergleich des erfindungsgemäßen Verfahrens mit herkömmlichen Verfahren, nämlich der Persistenzvorhersage und linearen, autoregressiven Modellen ist anhand von praktisch gewonnenen Messergebissen an einem Windstromgenerator in den Figuren 10a-d illustriert. Als erfindungsgemäß ausgewerteter Strömungsparameter wurde die am Windstromgenerator gemessene elektrische Leistung verwendet.

Figur 10a zeigt den relativen Vorhersagefehler der elektrischen Leistung für die verschiedenen Modelle, die an den Kurven jeweils angegeben sind, und die relative Verbesserung des nicht-linearen Modells gegenüber dem Persistenz-Modell (untere Kurve). Der gemittelte Vorhersagefehler bei der Leistungsvorhersage von Windstromgeneratoren ist erfindungsgemäß bis zu 10 % geringer als bei den herkömmlichen linearen Modellen und sogar bis zu 20 % geringer als beim Persistenz-Modell. Von besonderem Vorteil ist, dass diese Verbesserung innerhalb von einigen Sekunden gegeben ist. In dieser Zeit lassen sich Windstromgeneratoren effektiv auf die kommende Turbulenz einrichten.

Figur 10b zeigt, dass die durch das nicht-lineare Modell vorhergesagte Fluktuationen der Leistung die tatsächlichen Inkremente der Leistung wesentlich genauer beschreiben als herkömmliche lineare Modelle. In Figur 10b ist die Wahrscheinlichkeitsverteilung der Leistungsinkremente in einem Vorhersagezeitraum von einer Sekunde dargestellt. Relativ häufig auftretende starke Schwankungen der Leistungen werden durch das erfindungsgemäß verwendete nicht-lineare Modell besser vorhergesagt.

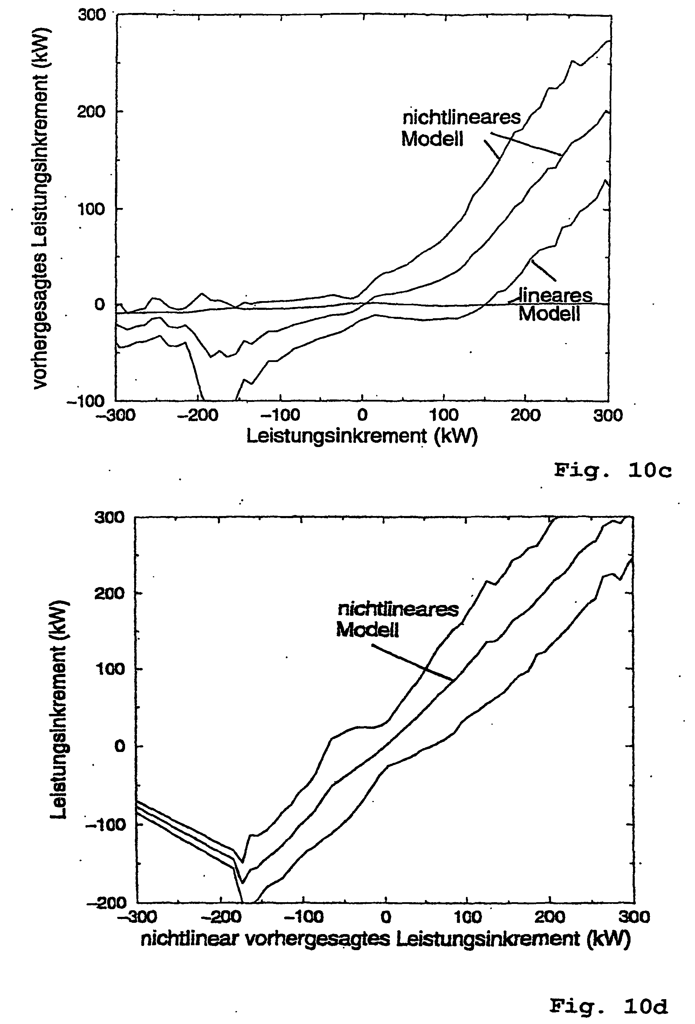

Besonders in Situationen, in denen sehr starke Leistungsschwankungen auftreten oder durch das nicht-linare Modell vorhergesagt werden, sind die Vorhersagen des nicht-linearen Modells deutlich genauer als die eines herkömmlichen linearen Modells. Dies ist in Figur 10c mit der Darstellung des mittleren vorhergesagten Leistungsinkrementes in Abhängigkeit vom tatsächlichen Leistungsinkrement für beide Modelle dargestellt. Die Ergebnisse wurden an einer 660 kW-Anlage mit einem Vorhersagehorizont von einer Sekunde erhalten. Für die Vorhersagen des nicht-linearen Modells ist weiterhin die Streuung der Vorhersagen in Höhe der Standardabweichung um die mittleren Vorhersagen dargestellt. Es zeigt sich, dass das nicht-lineare Modell besonders bei starken Inkrementen die tatsächlichen Fluktuationen im Mittel richtig beschreibt, wogegen ein lineares Modell zur Beschreibung der Daten ungeeignet ist.

In Figur 10d sind die tatsächlich beobachteten Inkremente in Situationen dargestellt, in denen das nicht-lineare Modell starke Schwankungen vorhersagt (mittlere Kurve). Hier wurde wieder die Standardabweichung der Streuung der Vorhersagen abgezogen bzw. addiert (untere und obere Kurve). Diese Darstellung demonstriert die Sicherheit der erfindungsgemäßen Vorhersage. Es zeigt sich, dass starke vorhergesagte Schwankungen nicht nur im Mittel hohe tatsächliche Inkremente implizieren, sondern dass dies für jede Situation zutrifft. Man beobachtet eine deutliche Asymmetrie der Vorhersage. Positive Inkremente können besser vorhergesagt werden als negative Inkremente. Der Grund hierfür besteht im Abschneiden der Leistung bei 660 kW. Negative Inkremente können sich nicht durch ein typisches Muster in der Leistungszeitreihe ankündigen.

Die in der vorstehenden Beschreibung, den Zeichnungen und den Ansprüchen offenbarten Merkmale der Erfindung können sowohl einzeln als auch in beliebiger Kombination für die Verwirklichung der Erfindung in ihren verschiedenen Ausgestaltungen von Bedeutung sein.

**Patentansprüche**

1. Verfahren zur Verarbeitung und Vorhersage von Strömungsdaten eines strömenden Mediums, wobei eine laufend aufeinander folgende Messung von Werten ($s_k$) mindestens eines Strömungsparameters an einem oder verschiedenen Orten im Medium vorgesehen ist, wobei der Strömungsparameter für die Geschwindigkeit des Mediums charakteristisch ist und die Werte ($S_k$) einen aktuellen Kurvenverlauf bilden,
**gekennzeichnet durch** die weiteren Schritte:

   - Bildung von n-dimensionalen Zeitversatzvektoren aus den gemessenen Werten ($S_k$) des mindestens einen Strömungsparameters, wobei die Zeitversatzvektoren Zustände in einem n-dimensionalen Phasenraum beschreiben und aufeinander folgende Zustände eine jeweils fortgeschriebene Zeitreihe von Zuständen ($x_k$) bilden, wobei
   - die Zeitreihe einer nicht-linear deterministischen Vorhersageprozedur auf der Grundlage eines lokal konstanten Phasenraummodells zur Erzeugung von Vorhersagewerten für die jeweils folgenden Strömungsparameter unterzogen wird, wobei die Vorhersageprozedur umfasst:

      - Suche nach ähnlichen Kurvenverläufen des Strömungsparameters in der Vergangenheit, die Zustände ($y_n$) repräsentieren, die im Phasenraum Nachbarn des aktuellen Zustands ($x_n$) sind, und
      - Ermittlung des Vorhersagewertes ($S_{n+1}$) als arithmetischer Mittelwert aus Folgewerten der Zustände ($y_n$), und

      - Erzeugung eines vorbestimmten Steuersignals, wenn die Vorhersagewerte für eine kommende Änderung der Strömungsgeschwindigkeit charakteristisch sind.

2. Verfahren gemäß Anspruch 1, bei dem der Strömungsparameter die Strömungsgeschwindigkeit, die elektrische Leistung eines im strömenden Medium angeordneten Energiewandlers oder die Änderung der Strömungsgeschwindigkeit umfasst.

3. Verfahren gemäß Anspruch 1 oder 2, bei dem die Vorhersagewerte vorhergesagte Werte der Strömungsgeschwindigkeit, die elektrische Leistung eines im strömenden Medium angeordneten Energiewandlers oder der Änderung der Strömungsgeschwindigkeit umfassen.

4. Verfahren gemäß Anspruch 3, bei dem die Differenz zwischen vorhergesagtem Wert und Persistenz die relevante Stellgröße für nachfolgende Steuerungsverfahren ist.

5. Verfahren gemäß einem der vorhergehenden Ansprüche, bei dem die Strömungsdaten Winddaten einer bodennahen Luftströmung oder Leistungsdaten eines Windstromgenerators umfassen und das Steuersignal gebildet wird, wenn das Einlaufen einer Windböe oder eine Änderung der mittleren Windgeschwindigkeit vorhergesagt wird.

6. Verfahren gemäß Anspruch 5, bei dem als Strömungsparameter die Windgeschwindigkeit oder die elektrische Leistung des Windstromgenerators gemessen und das Einlaufen einer Windböe vorhergesagt wird, wenn die vorhergesagte Abweichung der Windgeschwindigkeit oder die elektrische Leistung von der Persistenz größer als ein vorbestimmter Schwellwert ist.

7. Verfahren gemäß einem der Ansprüche 5 oder 6, bei dem die Windgeschwindigkeit mit einem Windmesser (2) oder einem Leistungsmesser eines Windstromgenerators (1) gemessen wird und mit dem bei Vorhersage einer Böe erzeugten Steuersignal ein Abbremsen des Windgenerators ausgelöst wird.

8. Verfahren gemäß Anspruch 7, bei dem das Abbremsen des Windgenerators eine Verringerung des Anstellwinkels der Rotorblätter (3) des Windgenerators und/oder eine elektrische Regelung des Generatorwiderstandes umfasst.

9. Verfahren gemäß einem der Ansprüche 5 bis 8, bei dem als Strömungsparameter an mehreren Orten die Windgeschwindigkeit gemessen und mit einem lokal konstanten Modell vorhergesagt wird und ein Steuersignal erzeugt wird, wenn die vorhergesagte mittlere Abweichung der Windgeschwindigkeit größer als ein Schwellwert ist.

10. Verfahren gemäß Anspruch 9, bei dem mit dem Steuersignal die Einstellung konventioneller Energiewandler auf eine geänderte Leistung bewirkt wird.

11. Verfahren gemäß einem der vorhergehenden Ansprüche, bei dem als Strömungsdaten Windgeschwindigkeiten oder Leistungsdaten ($s_n$) gemäß den folgenden Schritten verarbeitet werden:

   a) Erfassung einer Vielzahl von Geschwindigkeitswerten oder Leistungsdaten ($s_k$) mit einem Abtastabstand $\tau$,
   b) Bildung der Zeitversatzvektoren, von denen jeder aus den Komponenten ($s_n$) besteht, wobei deren Anzahl m die Einbettungsdimension ist, das Einbettungsfenster die Breite m $\tau$ besitzt und für jeden dieser Zeitversatzvektoren eine Umgebung U aus allen Zeitversatzvektoren gebildet wird und der Abstand dieser Zeitversatzvektoren zum jeweils betrachteten Zeitversatzvektor kleiner als ein vorbestimmter Wert $\varepsilon$ ist, und
   c) Ermittlung des Vorhersagewertes ($s_{n+1}$) als arithmetischer Mittelwert aus den Folgewerten der Nachbarn des jeweils aktuellen Zeitversatzvektors in der Umgebung U.

12. Vorrichtung (4) zur Verarbeitung von Strömungsdaten eines strömenden Mediums mit einem Verfahren gemäß einem der vorhergehenden Ansprüche, umfassend:

   - eine Messeinrichtung zum Messen von Werten ($s_n$) des mindestens einen Strömungsparameters, der für die Geschwindigkeit des Mediums charakteristisch ist,

   **gekennzeichnet durch**

   - eine Recheneinrichtung zur Bildung von n-dimensionalen Zeitversatzvektoren aus den gemessenen Werten ($s_k$) des mindestens einen Strömungsparameters, wobei die Zeitversatzvektoren Zustände in einem n-dimensionalen Phasenraum beschreiben und aufeinander folgende Zustände eine jeweils fortgeschriebene Zeitreihe von Zuständen ($x_k$) bilden, und zur Verarbeitung der Zeitreihe mit einer nicht-linear deterministischen Vorhersageprozedur auf der Grundlage eines lokal konstanten Phasenraummodells zur Erzeugung von Vorhersagewerten für die jeweils folgenden Strömungsparameter , wobei die Vorhersageprozedur eine Suche nach ähnlichen Kurvenverläufen des Strömungsparameters in der Vergangenheit, die Zustände ($y_n$) repräsentieren, die im Phasenraum Nachbarn des aktuellen Zustands ($x_n$) sind, und eine Ermittlung des Vorhersagewertes ($S_{n+1}$) als arithmetischer Mittelwert aus Folgewerten der Zustände ($y_n$) umfasst,

- eine Vergleichereinrichtung zum Vergleich der Vorhersagewerte mit vorbestimmten Referenzkriterien, und
- eine Ausgabeeinrichtung für die Vorhersagewerte und/oder eines vorbestimmten Steuersignals umfasst.

13. Vorrichtung gemäß Anspruch 12, die Teil einer Steuereinheit eines Windgenerators (1) ist, wobei die Messeinrichtung ein Windmesser (2) oder ein Leistungsmesser ist und eine Stelleinrichtung zum Abbremsen des Windgenerators (1) bei Ausgabe vorbestimmter Vorhersagewerte und/oder Steuersignale vorgesehen ist.

14. Verwenden eines Verfahrens oder einer Vorrichtung gemäß einem der vorhergehenden Ansprüche zum Betrieb eines Windgenerators.

**Claims**

1. Process for processing and predicting the flow data of a flowing medium, in which successive measurements of values ($S_k$) of at least one flow parameter are provided at one or more places in the medium, whereby the flow parameter for the speed of the medium is characteristic and the values ($S_k$) form an actual curve line, **characterised by** the further steps:

   - formation of n-dimensional time-lag vectors from the measured values ($S_k$) of at least one of the flow parameters, in which the time-lag vectors describe conditions in an n-dimensional phase space and successive states form a further updated time sequence of states ($x_k$), wherein
   - the time sequence is subjected to a non-linear deterministic prediction procedure on the basis of a locally constant phase space model for generating prediction values for the respective following flow parameters, whereby the prediction procedure includes:

     - a search for similar curve lines of previous flow parameters, which represent states ($y_n$), which in the phase space are neighbours of the actual state ($x_n$) and
     - a determination of the prediction value ($S_{n+1}$) as an arithmetic average from the subsequent values of the states ($y_n$), and
     - generation of a predetermined control signal if the prediction values are characteristic for an imminent change of the flow speed.

2. Process in accordance with Claim 1, in which the flow parameter includes the flow speed, the electrical output of an energy converter arranged in a flowing medium or a change in the flow speed.

3. Process in accordance with Claim 1 or 2, in which the prediction values include predicted values of the flow speed, the electrical output of an energy converter arranged in a flowing medium or a change in the flow speed.

4. Process in accordance with Claim 3, in which the difference between the predicted value and persistence is the relevant variable for the subsequent control process.

5. Process according to any one of the preceding claims, in which the flow data include the wind data of an airflow close to the ground or the output data of a wind flow generator and the control signal is formed with the onset of a wind squall or a change in the average wind speed.

6. Process in accordance with Claim 5, in which the wind speed or the electrical output of the wind flow generator are measured as flow parameters and the onset of a wind squall is predicted when the predicted deviation of the wind speed or the electrical output from persistence is greater than a predetermined threshold value.

7. Process in accordance with either Claim 5 of Claim 6, in which the wind speed is measured by means of an anemometer (2) or the output meter of a wind flow generator (1) and with which a moderation of the wind generator is triggered by the control signal generated by the prediction of a wind squall.

8. Process in accordance with Claim 7, in which the moderation of the wind generator includes a reduction of the angle of incidence of the rotor blades (3) of the wind generator and/or an electrical adjustment of the generator resistance.

9. Process in accordance with any one of the claims 5 to 8, in which the wind speed is measured as a flow parameter at a number of points and predictions are made using a locally constant model and a control signal is generated where the predicted average deviation of the wind speed is greater than a threshold value.

10. Process in accordance with Claim 9, in which the adjustment of conventional energy converters to a modified output is effected by means of the control signal.

11. Process according to any one of the above claims, in which wind speeds or output data ($s_n$) are processed as flow data in accordance with the following steps:

a) detecting a number of speed values or output data ($s_k$) with a scanning interval $\tau$;

b) creation of time-lag vectors, each one comprising the components ($s_n$), whereby their total number m represents the embedding dimension, the embedding window has a width of m . $\tau$ and for each of these time-lag vectors an environment U is formed from all time-lag vectors and the distance between these time-lag vectors and the respective time-lag vector in question is less than a predetermined value $\varepsilon$, and

c) determination of the prediction value ($S_{n+1}$) as an arithmetic average from the subsequent values of the time-lag values adjoining the respective time-lag vector in the environment U.

12. Device (4) for the processing of the flow data of a flowing medium using a process in accordance with any one of the above claims, comprising:

- a measuring device to measure the values ($s_n$) of at least one flow parameter which is characteristic for the speed of the medium,

**characterised by:**

- a calculating device for the formation of n-dimensional time-lag vectors from the measured values ($S_k$) of at least one flow parameter, whereby the time-lag vectors describe states in an n-dimensional phase space and successive states form a further updated time series of states ($x_k$), and for the processing of the time series with a non-linear deterministic prediction procedure on the basis of a locally constant phase space model for the generation of prediction values for subsequent flow parameters, whereby the prediction procedure includes a search for previous similar curve lines of the flow parameter that represent the states ($y_n$), which in the phase space are neighbours of the current state ($x_n$), and a calculation of the prediction value ($s_{n+1}$) as an arithmetic average from subsequent values of the states ($y_n$), and which includes:

- a comparator device to compare prediction values with predetermined reference criteria, and
- an output device for the prediction values and/or a predetermined control signal.

13. Device in accordance with Claim 12, which is a part of a control unit of a wind generator (1), in which the measuring device is an anemometer (2) or an output gauge and a setting device is provided for the purpose of moderating the wind generator (1) when predetermined prediction values and/or control signals are emitted.

14. The application of a process or a device in accordance with any of the above claims for the operation of a wind generator.

**Revendications**

1. Procédé pour traiter et prévoir des données d'écoulement d'un milieu qui s'écoule, sachant qu'une mesure constamment successive des valeurs ($s_x$) d'au moins un paramètre d'écoulement est prévue à un ou différents endroits dans le milieu, le paramètre d'écoulement étant caractéristique pour la vitesse du milieu et les valeurs ($s_x$) formant un profil actuel de courbe, **caractérisé par** les étapes suivantes :

- formation de vecteurs n dimensionnels de décalage temporel à partir des valeurs mesurées ($s_x$) d'au moins un paramètre d'écoulement, les vecteurs de décalage temporel décrivant des états dans un espace de phase n dimensionnel et les états successifs formant une série temporelle d'états ($x_x$) respectivement actualisée, sachant que

- la série temporelle est soumise à une procédure de prévision déterministe non linéaire sur la base d'un modèle d'espace de phase localement constant en vue de générer des valeurs de prévision pour les paramètres d'écoulement respectivement suivants, la procédure de prévision comprenant :

- la recherche de profils de courbe similaires du paramètre d'écoulement dans le passé, lesquels représentent les états $(y_n)$ qui dans l'espace de phase sont voisins de l'état actuel $(x_n)$, et
- la détermination de la valeur de prévision $(S_{n+1})$ en tant que valeur moyenne arithmétique issue des valeurs séquentielles des états $(y_n)$
- génération d'un signal prédéterminé de commande, lorsque les valeurs de prévision sont caractéristiques pour une modification future de la vitesse de l'écoulement.

2. Procédé selon la revendication 1, dans lequel le paramètre d'écoulement comprend la vitesse d'écoulement, la puissance électrique d'un convertisseur d'énergie disposé dans le milieu qui s'écoule ou la modification de la vitesse d'écoulement.

3. Procédé selon la revendication 1 ou 2, dans lequel les valeurs de prévision comprennent les valeurs prédites de la vitesse d'écoulement, la puissance électrique d'un convertisseur d'énergie disposé dans le milieu qui s'écoule, ou de la modification de la vitesse d'écoulement.

4. Procédé selon la revendication 3, dans lequel la différence entre valeur prédite et persistance est la grandeur significative de commande pour les procédés de commande subséquents.

5. Procédé selon l'une des revendications précédentes, dans lequel les données d'écoulement comprennent des données éoliennes d'un écoulement d'air près du sol ou des données de puissance d'un générateur de courant éolien et dans lequel le signal de commande est formé lorsque l'arrivée d'une rafale de vent ou une modification de la vitesse moyenne du vent est prédite.

6. Procédé selon la revendication 5, dans lequel la vitesse du vent ou la puissance électrique du générateur de courant éolien est mesurée comme paramètre d'écoulement et dans lequel l'arrivée d'une rafale de vent est prédite lorsque l'écart prédit de la vitesse du vent ou la puissance électrique de la persistance est supérieur à une valeur seuil prédéterminée.

7. Procédé selon l'une des revendications 5 ou 6, dans lequel la vitesse du vent est mesurée à l'aide d'un anémomètre (2) ou d'un wattmètre d'un générateur de courant éolien (1) et un ralentissement du générateur éolien est déclenché à l'aide du signal de commande généré lors de la prévision d'une rafale.

8. Procédé selon la revendication 7, dans lequel le ralentissement du générateur éolien comprend une réduction de l'angle d'incidence des pales du rotor (3) du générateur éolien et/ou un réglage électrique de la résistance du générateur.

9. Procédé selon l'une des revendications 5 à 8, dans lequel la vitesse du vent est mesurée comme paramètre d'écoulement à plusieurs endroits et est prédite avec un modèle localement constant et un signal de commande est généré lorsque l'écart moyen prédit de la vitesse du vent est supérieur à une valeur seuil.

10. Procédé selon la revendication 9, dans lequel les convertisseurs conventionnels d'énergie sont réglés à l'aide du signal de commande sur une puissance modifiée.

11. Procédé selon l'une des revendications précédentes, dans lequel les vitesses du vent ou les données de puissance $(S_n)$ sont traitées comme données d'écoulement selon les étapes suivantes :

a) enregistrement d'une multitude de valeurs de vitesse ou de données de puissance $(S_x)$ avec un intervalle d'échantillonnage $\tau$,
b) formation des vecteurs de décalage temporel parmi lesquels chacun se compose des composants $(S_n)$, sachant que leur nombre m est la dimension d'inclusion, la fenêtre d'inclusion possédant la largeur $m\,\tau$ et pour chacun de ces vecteurs de décalage temporel un voisinage U est formé à partir de ces vecteurs de décalage temporel et l'écart de ces vecteurs de décalage temporel par rapport au vecteur de décalage temporel respectivement considéré est inférieur à une valeur prédéterminée $\varepsilon$, et
c) détermination de la valeur de prévision $(S_{n+1})$ en tant que valeur moyenne arithmétique issue des valeurs séquentielles des voisins du vecteur de décalage temporel respectivement actuel dans le voisinage U.

**12.** Dispositif (4) pour traiter des données d'écoulement d'un milieu qui s'écoule, à l'aide d'un procédé selon l'une des revendications précédentes, comprenant :

- un dispositif de mesure pour mesurer des valeurs ($S_n$) d'au moins un paramètre d'écoulement qui est caractéristique pour la vitesse du milieu, **caractérisé par**
- un dispositif de calcul pour former des vecteurs de décalage temporel n dimensionnels à partir des valeurs mesurées ($S_x$) d'au moins un paramètre d'écoulement, sachant que les vecteurs de décalage temporel décrivent des états dans un espace de phase n dimensionnel et les états successifs forment une série temporelle d'états ($x_x$) respectivement actualisée, et pour traiter la série temporelle avec une procédure de prévision déterministe non linéaire sur la base d'un modèle d'espace de phase localement constant en vue de générer des valeurs de prévision pour les paramètres d'écoulement respectivement suivants, sachant que la procédure de prévision comprend une recherche de profils de courbe similaires du paramètre d'écoulement dans le passé lesquels représentent les états ($y_n$) qui sont voisins dans l'espace de phase de l'état actuel ($x_n$), et une détermination de la valeur de prévision ($s_{n+1}$) comme valeur moyenne arithmétique issue des valeurs séquentielles des états ($y_n$),
- un dispositif de comparaison pour comparer les valeurs de prévision aux critères de référence prédéterminés, et
- un dispositif de sortie pour les valeurs de prévision et/ou d'un signal de commande prédéterminé.

**13.** Dispositif selon la revendication 12, lequel fait partie d'une unité de commande d'un générateur éolien (1), le dispositif de mesure étant un anémomètre (2) ou un wattmètre et un dispositif de réglage étant prévu pour ralentir le générateur éolien (1) en cas de sortie de valeurs prévisionnelles prédéterminées et/ou de signaux de commande.

**14.** Utilisation d'un procédé ou d'un dispositif selon l'une des revendications précédentes pour l'exploitation d'un générateur éolien.

Fig. 1

Fig. 2

Fig. 3

d[m/s]

Fig. 4

18

Fig. 5a

Fig. 5b

Fig. 5d

EP 1 299 779 B1

Fig. 5c

Fig. 6

Fig. 7

```
                    ┌─────────────┐
                    │    Start    │
                    └─────────────┘
                           │
              ┌────────────────────────┐  101
              │        Messung         │
              │   Windgeschwindigkeit  │◄──────────────┐
              └────────────────────────┘               │
                           │                           │
              ┌────────────────────────┐  102          │
              │  Zeitreihenerzeugung    │               │
              │ Anwendung Vorhersagemodell              │
              │  Erzeugung Vorhersagewert               │
              └────────────────────────┘               │
                           │                           │
                      ╱────────╲  103                  │
                    ╱  Vergleich  ╲                    │
                   ╱  mit Referenz- ╲   n               │
                   ╲    kriterium   ╱───────────────────┤
                    ╲    Böe?     ╱                      │
                      ╲────────╱                        │
                         │ j                            │
              ┌────────────────────────┐  104           │
              │    Abbremsen des        │               │
              │       Rotors            │               │
              └────────────────────────┘               │
                           │                            │
              ┌────────────────────────┐  105           │
              │  Messung Folgewert der  │               │
              │   Windgeschwindigkeit   │◄──────┐        │
              └────────────────────────┘        │        │
                           │                     │        │
                      ╱────────╲  106            │        │
                    ╱  Vergleich  ╲              │        │
                   ╱  mit Vorher-  ╲   j  ┌──────────┐ 107│
                   ╲   sagewert    ╱─────│    Δt     │    │
                    ╲ Bestätig.? ╱       └──────────┘    │
                      ╲────────╱                          │
                         │ n                              │
              ┌────────────────────────┐  108             │
              │    Rückstellen des      │─────────────────┘
              │        Rotors           │
              └────────────────────────┘
                           │
                    ┌─────────────┐
                    │    Ende     │
                    └─────────────┘
```

22

Fig. 8

Cup-Anemometer

Windfahne

M4    M3    M2    M1

Fig. 9

**Fig. 10a**

**Fig. 10b**

Fig. 10c

Fig. 10d